# NEUE EUROPÄISCHE PATENTSCHRIFT

(11) **EP 3 743 217 B2**
(45) Veröffentlichungstag und Bekanntmachung des Hinweises auf die Entscheidung über den Einspruch: **26.11.2025**
(45) Hinweis auf die Patenterteilung: 09.03.2022
(21) Anmeldenummer: 19703645.2
(22) Anmeldetag: 23.01.2019
(51) Int. Cl.: B05B 7/14

(54) **MEHRFARBENPULVERZENTRUM ZUM BEDARFSWEISEN VERSORGEN VON MINDESTENS EINER PULVERSPRÜHEINRICHTUNG MIT BESCHICHTUNGSPULVER UNTERSCHIEDLICHER ART**
MULTICOLOR POWDER CENTER FOR SUPPLYING AT LEAST ONE POWDER SPRAYING DEVICE WITH DIFFERENT TYPES OF COATING POWDER AS REQUIRED
CENTRE D'ALIMENTATION EN POUDRE MULTICOLORE DESTINÉ À ALIMENTER SELON LES BESOINS AU MOINS UN ÉQUIPEMENT D'ASPERSION DE POUDRE EN POUDRE DE REVÊTEMENT DE TYPES DIFFÉRENTS

(30) Priorität: 23.01.2018 DE 102018000514
(43) Veröffentlichungstag der Anmeldung: 02.12.2020
(73) Patentinhaber: Gema Switzerland GmbH, 9200 Gossau (CH)
(72) Erfinder: MLAKAR, Roman, 8280 Kreuzlingen (CH); STEINEMANN, Mark, 8353 Elgg (CH); SANWALD, Marco, 9030 Abtwil (CH); MAUCHLE, Felix, 9030 Abtwil (CH)
(74) Vertreter: Meissner Bolte Partnerschaft mbB
(86) Internationale Anmeldenummer: PCT/EP2019/051642
(87) Internationale Veröffentlichungsnummer: WO 2019/145365

(56) Entgegenhaltungen:
- EP-B1- 2 218 514
- WO-A1-00/29124
- WO-A1-2009/123794
- DE-A1- 102010 025 749

## Beschreibung

Die Erfindung betrifft ein Mehrfarbenpulverzentrum zum bedarfsweisen Versorgen von mindestens einer Pulversprüheinrichtung mit Beschichtungspulver unterschiedlicher Art. Siehe hierzu WO00/29124.

Das erfindungsgemäße Mehrfarbenpulverzentrum eignet sich insbesondere für die Pulverversorgung von zur elektrostatischen Sprühbeschichtung von Gegenständen mit Pulver eingesetzten Pulversprüheinrichtungen, bei welcher sich frisches Beschichtungspulver (hierin auch "Frischpulver" genannt) und gegebenenfalls zurückgewonnenes Beschichtungspulver (hierin auch "Recovery Pulver" genannt) in Pulverbehältern befindet und durch eine Pumpeneinheit mit mindestens einer Pulverpumpe, beispielsweise in Gestalt eines Pulverinjektors oder in Gestalt einer Pulverdichtstrompumpe, einer oder mehreren Sprühvorrichtungen bzw. Pulversprüheinrichtungen zugeführt werden. Die Sprühvorrichtungen/Pulversprüheinrichtungen können beispielsweise Handpistolen oder automatische Pistolen sein.

Der Erfindung liegt die Problemstellung zugrunde, dass Pulverbeschichtungsanlagen und die zugehörigen Pulverversorgungsvorrichtungen bei einem Pulverwechsel (Wechsel von einer Pulversorte auf eine andere Pulversorte), und insbesondere bei einem Farbwechsel (Wechsel von Pulver einer ersten Farbe auf ein Pulver mit einer anderen zweiten Farbe) sorgfältig gereinigt werden müssen, da bereits einige wenige Pulverpartikel der früheren Pulversorte Beschichtungsfehler bei der Beschichtung mit der neuen Pulversorte zur Folge haben können.

Durch die Erfindung soll die Aufgabe gelöst werden, eine Möglichkeit zu schaffen, durch welche ein Pulverwechsel auf einfache Weise schnell möglich bzw. eine Mehrfarbensprühbeschichtung möglichst effizient realisierbar ist.

Diese Aufgabe wird gemäß der Erfindung durch die Merkmale des unabhängigen Patentanspruchs 1 gelöst. Vorteilhafte Weiterbildungen des erfindungsgemäßen Mehrfarbenpulverzentrums sind in den abhängigen Patentansprüchen angegeben.

Demgemäß wird insbesondere ein Mehrfarbenpulverzentrum zum bedarfsweisen Versorgen von mindestens einer Pulversprüheinrichtung mit Beschichtungspulver unterschiedlicher Art angegeben, wobei das Mehrfarbenpulverzentrum einen ersten Pulverbehälter zur Aufnahme von Beschichtungspulver einer ersten Art und mindestens einen zweiten Pulverbehälter zur Aufnahme von Beschichtungspulver einer zweiten Art aufweist. Darüber hinaus ist mindestens eine Pulverabgabeeinrichtung in Gestalt einer Pumpeneinheit mit mindestens einer Pulverpumpe in Gestalt einer Dichtstrompulverpumpe vorgesehen. Die Druckseite der Pulverpumpe ist strömungsmäßig mit dem Pulvereinlass einer Pulversprüheinrichtung, wie beispielsweise einer Handpistole oder einer automatischen Pulverpistole, verbunden oder verbindbar.

Gemäß einem Aspekt der Erfindung ist insbesondere vorgesehen, dass die mindestens eine Pumpeneinheit und/oder die Pulverbehälter derart relativ zueinander bewegbar sind, dass bedarfsweise die Saugseite der mindestens einen Pulverpumpe strömungsmäßig entweder mit dem Inneren des ersten Pulverbehälters oder mit den Inneren des mindestens einen zweiten Pulverbehälters verbunden oder verbindbar ist.

Gemäß der Erfindung ist die Pumpeneinheit derart relativ zu den Pulverbehältern bewegbar, dass bedarfsweise die Saugseite der mindestens einen Pulverpumpe strömungsmäßig entweder mit dem Inneren des ersten Pulverbehälters oder mit dem Inneren des mindestens einen zweiten Pulverbehälters verbunden oder verbindbar ist.

Dadurch, dass das erfindungsgemäße Mehrfarbenpulverzentrum mindestens eine relativ zu den Pulverbehältern bewegbare Pumpeneinheit aufweist, ist in einer leicht zu realisierenden und insbesondere effektiven Weise ein Pulverwechsel bzw. ein Mehrfarbensprühbeschichtungsbetrieb möglich. Hierzu ist es lediglich erforderlich, dass die Pumpeneinheit von einem ersten Pulverbehälter zu einem zweiten Pulverbehälter transferiert wird, so dass dann die Saugseite der Pumpeneinheit mit dem Inneren des zweiten Pulverbehälters verbindbar ist.

Gemäß einem Aspekt der vorliegenden Erfindung ist ferner eine erste Reinigungsstation vorgesehen ist zum bedarfsweisen Aufnehmen von Restpulver, welches bei einer Reinigung der mindestens einen Pumpeneinheit und/oder eines von der Pumpeneinheit zu mindestens einer Pulversprüheinrichtung führenden Leitungssystems und/oder mindestens einer Pulversprüheinrichtung, insbesondere bei einem Wechsel von einer ersten Pulverart auf eine hiervon verschiedene zweite Pulverart, anfällt.

Alternativ oder zusätzlich hierzu kann eine zweite Reinigungsstation vorgesehen sein zum bedarfsweisen Reinigen der mindestens einen Pumpeneinheit und/oder eines von der Pumpeneinheit zu mindestens einer Pulversprüheinrichtung führenden Leitungssystems und/oder mindestens einer Pulversprüheinrichtung, insbesondere bei einem Wechsel von einer ersten Pulverart auf eine hiervon verschiedene zweite Pulverart.

Die bedarfsweise Reinigung findet insbesondere bei einem Wechsel von einer ersten Pulverart auf eine hiervon verschiedene zweite Pulverart statt. In diesem Zusammenhang ist es denkbar, dass die Pumpeneinheit derart relativ zu der Reinigungsstation bewegbar ist, dass diese bedarfsweise in oder an der Reinigungsstation gereinigt und insbesondere mit Reinigungsdruckluft gespült werden kann. Alternativ hierzu ist es denkbar, dass die Reinigungsstation derart relativ zu der Pumpeneinheit bewegbar ist, dass die Pumpeneinheit bedarfsweise in oder an der Reinigungsstation gereinigt und insbesondere mit Reinigungsdruckluft gespült werden kann.

Gemäß Ausführungsformen des erfindungsgemäßen Mehrfarbenpulverzentrums ist der Reinigungsstation und/oder der Pumpeneinheit selber ein Antrieb zugeordnet, um somit die Reinigungsstation relativ zu der Pumpeneinheit derart bewegen zu können, dass die Pumpeneinheit bedarfsweise in oder an der Reinigungsstation gereinigt und insbesondere mit Reinigungsdruckluft gespült werden kann.

Bei dem erfindungsgemäßen Mehrfarbenpulverzentrums ist vorgesehen, dass der mindestens einen Pumpeneinheit eine Wagen- oder Schlittenanordnung zugeordnet ist, mit Hilfe welcher die Pumpeneinheit mit einer Andockeinheit in einer horizontalen Ebene und oberhalb der Pulverbehälter sowie relativ zu diesen geführt bewegbar ist.

Gemäß Ausführungsformen des erfindungsgemäßen Mehrfarbenpulverzentrums ist vorgesehen, dass dem ersten Pulverbehälter und/oder dem mindestens einen zweiten Pulverbehälter ein Antrieb, insbesondere Linearantrieb, zugeordnet ist zum bedarfsweisen Bewegen des entsprechenden Pulverbehälters relativ zu der Pumpeneinheit. Denkbar in diesem Zusammenhang ist es insbesondere, dass der erste Pulverbehälter und der mindestens eine zweite Pulverbehälter jeweils unabhängig voneinander relativ zu der Pumpeneinheit bewegbar sind.

Gemäß Ausführungsformen des erfindungsgemäßen Mehrfarbenpulverzentrums weist die mindestens eine Pumpeneinheit mindestens zwei insbesondere unabhängig voneinander betreibbare Pulverpumpen auf, welche in der Pumpeneinheit derart angeordnet sind, dass in einem Zustand, wenn die Pumpeneinheit mit einem Pulverbehälter oder einer Reinigungsstation gekoppelt ist, die mindestens zwei Pulverpumpen jeweils saugseitig mit dem Inneren des Pulverbehälters oder der Reinigungsstation verbunden sind.

Beispielsweise ist es denkbar, dass eine erste und mindestens eine weitere zweite Pumpeneinheit mit jeweils mindestens einer Dichtstrompulverpumpe vorgesehen sind, wobei die Pumpeneinheiten unabhängig voneinander relativ zu den Pulverbehältern bewegbar sind derart,
- dass bedarfsweise die Saugseite der mindestens einen Pulverpumpe der ersten Pumpeneinheit und die Saugseite der mindestens einen Pulverpumpe der mindestens einen zweiten Pumpeneinheit strömungsmäßig entweder mit dem Inneren des ersten Pulverbehälters oder mit dem Inneren des mindestens einen zweiten Pulverbehälters verbunden oder verbindbar sind; und/oder
- dass bedarfsweise die Saugseite der mindestens einen Pulverpumpe der ersten Pumpeneinheit strömungsmäßig mit dem Inneren eines ersten der mindestens zwei Pulverbehälter und die Saugseite der mindestens einen Pulverpumpe der zweiten Pumpeneinheit strömungsmäßig mit dem Inneren des anderen der mindestens zwei Pulverbehälter verbunden oder verbindbar sind.

In einer Weiterbildung der zuletzt genannten Ausführungsform des erfindungsgemäßen Mehrfarbenpulverzentrums sind die erste und die mindestens eine weitere zweite Pumpeneinheit relativ zueinander und relativ zu den Pulverbehältern in mindestens einer horizontalen Richtung bewegbar. Alternativ oder zusätzlich hierzu kann vorgesehen sein, dass der erste und der mindestens eine zweite Pulverbehälter relativ zueinander und relativ zu der ersten und der mindestens einen zweiten Pumpeneinheit in mindestens einer horizontalen Richtung bewegbar sind.

In einer denkbaren Realisierung des erfindungsgemäßen Mehrfarbenpulverzentrums ist eine Vielzahl von in einer Matrix zueinander angeordneten Pulverbehältern vorgesehen, wobei die mindestens eine Pumpeneinheit in einer ersten horizontalen Richtung und in einer zur ersten horizontalen Richtung orthogonalen zweiten horizontalen Richtung derart relativ zu den Pulverbehältern bewegbar ist, dass bedarfsweise die Saugseite der mindestens einen Pulverpumpe strömungsmäßig mit dem Inneren eines Pulverbehälters der Vielzahl der Pulverbehältern verbunden oder verbindbar ist.

Alternativ hierzu kann eine Vielzahl von in einer Matrix zueinander angeordneten Pulverbehältern vorgesehen sein, wobei die Pulverbehälter in einer ersten horizontalen Richtung und in einer zur ersten horizontalen Richtung orthogonalen zweiten horizontalen Richtung derart relativ zu der mindestens einen Pumpeneinheit bewegbar sind, dass bedarfsweise die Saugseite der mindestens einen Pulverpumpe strömungsmäßig mit dem Inneren eines Pulverbehälters der Vielzahl der Pulverbehältern verbunden oder verbindbar ist.

Alternativ hierzu kann eine Vielzahl von in einer Matrix zueinander angeordneten Pulverbehältern vorgesehen sein, wobei die Pulverbehälter in einer ersten horizontalen Richtung und die mindestens eine Pumpeneinheit in einer zur ersten horizontalen Richtung orthogonalen zweiten horizontalen Richtung derart bewegbar sind, dass bedarfsweise die Saugseite der mindestens einen Pulverpumpe strömungsmäßig mit dem Inneren eines Pulverbehälters der Vielzahl der Pulverbehältern verbunden oder verbindbar ist.

Gemäß der Erfindung weist die Pumpeneinheit die Andockeinheit auf, über welche die Saugseite der mindestens einen Pulverpumpe bedarfsweise mit dem Inneren eines der Pulverbehälter strömungsmäßig verbindbar ist. Dabei ist der Andockeinheit eine Vertikalführungseinheit zugeordnet, mit welcher die Andockeinheit in vertikaler Richtung relativ zu der mindestens einen Pulverpumpe der Pumpeneinheit und den Pulverbehältern bedarfsweise bewegbar ist.

Die Erfindung betrifft ferner ein Mehrfarbenpulverzentrum zum bedarfsweisen Versorgen von mindestens einer Pulversprüheinrichtung mit Beschichtungspulver unterschiedlicher Art, wobei das Mehrfarbenpulverzentrum mindestens einen Pulverbehälter zur Aufnahme von Beschichtungspulver und eine Pumpeneinheit aufweist mit mindestens einer Pulverpumpe in Gestalt einer Dichtstrompulverpumpe, deren Druckseite strömungsmäßig mit dem Pulvereinlass einer Pulversprüheinrichtung verbunden oder verbindbar ist. Gemäß der Erfindung ist vorgesehen, dass die Pumpeneinheit eine Andockeinheit aufweist, über welche die Saugseite der mindestens einen Pulverpumpe bedarfsweise mit dem Inneren des Pulverbehälters strömungsmäßig verbindbar ist.

Die Andockeinheit ist in vertikaler Richtung relativ zu der Pumpeneinheit sowie relativ zu dem Pulverbehälter bedarfsweise bewegbar zum strömungsmäßigen Verbinden oder strömungsmäßigen Trennen der Saugseite der mindestens einen Pulverpumpe mit bzw. von dem Inneren des Pulverbehälters.

Der Pulverbehälter weist mindestens einen vorzugsweise in einem Ansaugrohr ausgebildeten Ansaugkanal auf, welcher eine in das Innere des Pulverbehälters mündende Ansaugöffnung und eine gegenüberliegende Abgabeöffnung aufweist, welche in einem Anschluss mündet, wobei die Saugseite der mindestens einen Pulverpumpe über die Andockeinheit strömungsmäßig mit dem Anschluss des Pulverbehälters verbindbar ist. In diesem Zusammenhang ist es denkbar, dass der Anschluss in einem oberen Bereich und insbesondere in einem Deckelbereich des Pulverbehälters angeordnet ist, und zwar derart, dass der Anschluss über die Andockeinheit mit der Saugseite der mindestens einen Pulverpumpe der Pumpeneinheit strömungsmäßig verbindbar ist.

Gemäß Ausführungsformen weist die Andockeinheit einen der Saugseite der mindestens einen Pumpeneinheit zugeordneten ersten Anschluss und mindestens einen dem Pulverbehälter zugeordneten zweiten Anschluss auf, wobei der erste Anschluss über einen Leitungsabschnitt strömungsmäßig mit dem zweiten Anschluss verbunden ist, und wobei der Leitungsabschnitt derart flexibel ausgeführt ist, dass der zweite Anschluss relativ zu dem ersten Anschluss über eine vorab festgelegte Wegstrecke bewegbar ist. Die vorab festgelegte Wegstrecke entspricht insbesondere zumindest im Wesentlichen einem vertikalen Abstand zwischen dem zweiten Anschluss der Andockeinheit und einem Anschluss des Pulverbehälters.

Gemäß Ausführungsformen der erfindungsgemäßen Andockeinheit ist der zweite Anschluss der Andockeinheit derart komplementär zu einem Anschluss des Pulverbehälters ausgeführt, dass dieser mit dem Anschluss des Pulverbehälters so verbindbar ist, dass die mindestens eine Pulverpumpe der Pumpeneinheit strömungsmäßig mit einer entsprechenden Ansaugöffnung eines dem Pulverbehälter zugeordneten Ansaugkanals verbindbar ist. Beispielsweise sind/ist der zweite Anschluss der Andockeinheit und/oder der Anschluss des Pulverbehälters als vorzugsweise selbstschließende Schlauchkupplung, insbesondere Bajonettkupplung, ausgeführt.

Denkbar ist, dass ferner eine Reinigungsstation vorgesehen ist zum bedarfsweisen Reinigen der mindestens einen Pumpeneinheit und/oder eines von der Pumpeneinheit zu mindestens einer Pulversprüheinrichtung führenden Leitungssystems und/oder mindestens einer Pulversprüheinrichtung, insbesondere bei einem Wechsel von einer ersten Pulverart auf eine hiervon verschiedene zweite Pulverart. Die der Pumpeneinheit zugeordnete Andockeinheit ist vorzugsweise ausgebildet, bedarfsweise die Saugseite der mindestens einen Pulverpumpe mit einem Reinigungsanschluss der Reinigungsstation strömungsmäßig zu verbinden.

Gemäß der Erfindung sind die Andockeinheit und der mindestens eine Pulverbehälter relativ zueinander in vertikaler Richtung bewegbar. Hierzu ist vorgesehen, dass der Andockeinheit eine Vertikalführungseinheit zugeordnet ist zum bedarfsweisen Bewegen der Andockeinheit in vertikaler Richtung.

Die Erfindung betrifft ferner ein Mehrfarbenpulverzentrum zum bedarfsweisen Versorgen von mindestens einer Pulversprüheinrichtung mit Beschichtungspulver unterschiedlicher Art, wobei das Mehrfarbenpulverzentrum mindestens einen Pulverbehälter zur Aufnahme von Beschichtungspulver und mindestens eine Pumpeneinheit mit mindestens einer Pulverpumpe in Gestalt einer Dichtstrompulverpumpe aufweist, deren Druckseite strömungsmäßig mit dem Pulvereinlass einer Pulversprüheinrichtung verbunden oder verbindbar ist. Gemäß einem Aspekt ist insbesondere vorgesehen, dass der mindestens eine Pulverbehälter mindestens ein vorzugsweise in einem Ansaugrohr ausgebildeten Ansaugkanal aufweist, welcher eine in das Innere des Pulverbehälters mündende Ansaugöffnung und eine gegenüberliegende Abgabeöffnung aufweist, welche in einem Anschluss mündet, wobei die Saugseite der mindestens einen Pulverpumpe strömungsmäßig mit dem Anschluss des Pulverbehälters verbindbar ist.

Denkbar in diesem Zusammenhang ist es, dass der Anschluss in einem oberen Bereich und insbesondere in einem Deckelbereich des Pulverbehälters angeordnet ist, und zwar derart, dass der Anschluss mit der Saugseite der mindestens einen Pulverpumpe der Pumpeneinheit strömungsmäßig verbindbar ist.

Der mindestens eine Ansaugkanal ist in einem in das Innere des mindestens einen Pulverbehälters hineinragenden Tauchrohr oder in einer Seitenwand des mindestens einen Pulverbehälters ausgebildet.

Gemäß Ausführungsformen des erfindungsgemäßen Mehrfarbenpulverzentrums weist der mindestens eine Pulverbehälter eine im Wesentlichen quaderförmige oder zylinderförmige Pulverkammer für Beschichtungspulver und eine Fluidisiereinrichtung zum Einleiten von Fluidisierdruckluft in die Pulverkammer auf. In einer Seitenwand oder in einem Deckel des mindestens einen Pulverbehälters kann mindestens eine in das Innere des Pulverbehälters mündende Einlassöffnung vorgesehen sein zum bedarfsweisen Zuführen von Beschichtungspulver in einem Pulverbeschichtungsbetrieb des Mehrfarbenpulverzentrums oder wahlweise zum Einleiten von Reinigungsdruckluft in einem Reinigungsbetrieb des Mehrfarbenpulverzentrums bzw. des mindestens einen Pulverbehälters.

Bei der erfindungsgemäßen Lösung ist ferner mindestens ein aus dem Inneren des mindestens einen Pulverbehälters herausführender Auslass vorgesehen zum Abführen von in die Pulverkammer des mindestens einen Pulverbehälters eingeleiteter Fluidisierdruckluft oder wahlweise zum Abführen von in einem Reinigungsbetrieb in die Pulverkammer eingeleiteter Reinigungsluft gegebenenfalls zusammen mit von der Reinigungsdruckluft mit transportiertem Restpulver.

Die Pulverkammer des mindestens einen Pulverbehälters weist mindestens einen Fluidisierdruckluftauslass mit einer Auslassöffnung auf zum Abführen der in die Pulverkammer eingeleiteten Fluidisierdruckluft. Der Fluidisierdruckluftauslass weist eine Entlüftungsleitung auf, welche außerhalb des Pulverbehälters mit einem Steigrohr verbunden oder verbindbar ist zum Verhindern eines Pulveraustrags aus der Pulverkammer des mindestens einen Pulverbehälters in einem Pulverbeschichtungsbetrieb des Mehrfarbenpulverzentrums. Der mindestens eine Fluidisierdruckluftauslass weist eine Entlüftungsleitung auf. Die Entlüftungsleitung ist vorzugsweise einerseits mit der Auslassöffnung des Fluidisierdruckluftauslasses verbunden oder verbindbar und mündet andererseits in einen Absaugtrichter einer vorzugsweise als Luftmengenverstärker ausgebildeten Absauganlage.

Vorzugsweise ist ferner mindestens ein Niveausensor vorgesehen zum Detektieren von mindestens einem Pulverniveau im Inneren des mindestens einen Pulverbehälters. Der mindestens eine Niveausensor ist insbesondere ein berührungslos arbeitender Niveausensor, welcher außerhalb des Pulverbehälters getrennt vom Inneren des Pulverbehälters angeordnet ist.

Die Pulverbehälter können fixe, aneinandergereihte selbstreinigende Behältnisse sein oder einzelne bewegbare oder mobile Pulverbehälter. In diesem Zusammenhang ist es insbesondere denkbar, wenn die Pulverbehälter in einem automatischen Pulverzubringersystem eingebunden sind, so dass den Pulverbehältern automatisch oder wahlweise automatisch bei Bedarf entsprechendes Beschichtungspulver zugeführt werden kann. Das Pulverzubringersystem kann beispielsweise als Paternostersystem ausgeführt sein.

Jeder Pulverbehälter kann mit folgenden Funktionen ausgestattet sein:
- Niveausonde zur Füllstandsüberwachung und entsprechender Kommunikation;
- Fluidisierung bzw. Vorkonditionierung des Pulvers bei Pulvertypwechsel, damit sofort nach dem Andocken das Pulver gefördert wird;
- Integration eine Siebes;
- Integration einer Vibrationseinheit;
- Sensorik zur Erfassung der korrekten Positionierung des Pulverbehälters;
- Codeplatte, Barcode, RFID Karte, oder dergleichen zur Erfassung und/oder Identifikation des Pulverbehälters bzw. dessen Inhalts;
- Anbindung an ein größeres Frischpulverbehältnis (z.B. BigBag Station) außerhalb des Mehrfarbenzentrums zum automatischen Nachfüllen von Pulver; und/oder
- Anbindung an ein Pulverrückführungssystem.

In diesem Zusammenhang ist es denkbar, wenn dem Mehrfarbenpulverzentrum ein Recoverypulver-Rückführsystem zugeordnet ist zum bedarfsweisen Rückführen von Recoverypulver in den ersten Pulverbehälter und/oder in den mindestens einen zweiten Pulverbehälter. Das Recoverypulver-Rückführsystem kann mindestens eine Rückführleitung insbesondere in Gestalt eines Rückführschlauches aufweisen, welcher insbesondere bedarfsweise strömungsmäßig mit einer Pulverbeschichtungskabine oder Beschichtungsarbeitsplatz einerseits und dem ersten Pulverbehälter und/oder in dem mindestens einen zweiten Pulverbehälter verbunden oder verbindbar ist zum Rückführen von Recoverypulver in den entsprechenden Pulverbehälter. Die mindestens eine Rückführleitung ist vorzugsweise an einer Wagen- oder Schlittenanordnung relativ zu dem ersten Pulverbehälter und/oder dem mindestens einen zweiten Pulverbehälter bewegbar, insbesondere horizontal bewegbar.

Ferner kann die mindestens eine Rückführleitung relativ zu dem ersten Pulverbehälter und/oder dem mindestens einen zweiten Pulverbehälter bewegbar, insbesondere vertikal bewegbar sein zum Ausbilden einer strömungsmäßigen Verbindung mit dem entsprechenden Pulverbehälter.

Gemäß der Erfindung ist dem Mehrfarbenpulverzentrum ein Pulverbehälter-Entlüftungssystem zugeordnet zum bedarfsweisen Entlüften des ersten Pulverbehälters und/oder des mindestens einen zweiten Pulverbehälters. Das Pulverbehälter-Entlüftungssystem weist mindestens eine Entlüftungsleitung insbesondere in Gestalt eines Entlüftungsschlauches auf, welcher insbesondere bedarfsweise oder dauerhaft strömungsmäßig mit dem ersten Pulverbehälter und/oder dem mindestens einen zweiten Pulverbehälter verbunden ist zum Entlüften des entsprechenden Pulverbehälters. Auch hier ist es von Vorteil, wenn die mindestens eine Entlüftungsleitung an einer Wagen- oder Schlittenanordnung relativ zu dem ersten Pulverbehälter und/oder dem mindestens einen zweiten Pulverbehälter bewegbar, insbesondere horizontal bewegbar ist.

Die Pulverbehältergröße liegt vorzugsweise bei 5 bis 150 Liter, je nach Behältertyp.

Weitere Pulverbereitstellungen wie Vorrichtungen um direkt ab Pulverbox oder Pulvertonne zu fördern sind denkbar.

Gemäß Ausführungsformen der bei dem erfindungsgemäßen Mehrfarbenzentrum zum Einsatz kommenden Pulverbehälter sind diese jeweils mit einer Vibrationssiebvorrichtung für Sprühbeschichtungspulver ausgerüstet. Die Vibrationssiebvorrichtung kann ein Sieb und einen Vibrator zum Vibrieren des Siebes aufweisen. Beispielsweise ist der Vibrator als Druckluftvibrator oder Ultraschallsieb ausgeführt.

In einer Weiterbildung ist insbesondere ferner mindestens eine Einrichtung zum Messen des im Inneren des mindestens einen Pulverbehälters herrschenden Luftdruckes vorgesehen.

In diesem Zusammenhang ist es von Vorteil, wenn:
- die Menge einer pro Zeiteinheit dem mindestens einen Pulverbehälter zugeführten Fluidisierdruckluft in Abhängigkeit von dem im Inneren des mindestens einen Pulverbehälters herrschenden Luftdruck vorzugsweise automatisch einstellbar ist; und/oder
- die Menge einer pro Zeiteinheit dem mindestens einen Pulverbehälter zugeführten Reinigungsdruckluft in Abhängigkeit von dem im Inneren des mindestens einen Pulverbehälters herrschenden Luftdruck vorzugsweise automatisch einstellbar ist; und/oder
- die Menge einer pro Zeiteinheit aus dem mindestens einen Pulverbehälter abgeführten Fluidisierdruckluft in Abhängigkeit von dem im Inneren des mindestens einen Pulverbehälters herrschenden Luftdruck vorzugsweise automatisch einstellbar ist; und/oder
- die Menge einer pro Zeiteinheit über mindestens einen Restpulverauslass abgeführten Reinigungsdruckluft in Abhängigkeit von dem im Inneren des mindestens einen Pulverbehälters herrschenden Luftdruck vorzugsweise automatisch einstellbar ist.

Im Folgenden werden unter Bezugnahme auf die beiliegenden Zeichnungen exemplarische Ausführungsformen des hierin offenbarten Mehrfarbenpulverzentrums (nicht Teil der beanspruchten Erfindung) beschrieben.

In den Zeichnungen zeigen:
FIG. 1a schematisch und in einer isometrischen Ansicht eine erste exemplarische Ausführungsform des Mehrfarbenpulverzentrums;
FIG. 1b schematisch und in einer isometrischen Ansicht eine zweite exemplarische Ausführungsform des Mehrfarbenpulverzentrums;
FIG. 2a schematisch und in einer isometrischen Ansicht eine Detaillansicht einer bei der exemplarischen Ausführungsform gemäß FIG. 1a zum Einsatz kommenden Pumpeneinheit;
FIG. 2b schematisch und in einer isometrischen Ansicht eine Detaillansicht einer bei der exemplarischen Ausführungsform gemäß FIG. 1b zum Einsatz kommenden Pumpeneinheit;
FIG. 3a schematisch und in einer isometrischen Ansicht eine weitere Detaillansicht einer bei der exemplarischen Ausführungsform gemäß FIG. 1a zum Einsatz kommenden Pumpeneinheit;
FIG. 3b schematisch und in einer isometrischen Ansicht eine weitere Detaillansicht einer bei der exemplarischen Ausführungsform gemäß FIG. 1b zum Einsatz kommenden Pumpeneinheit;
FIG. 4 schematisch und in einer Seitenansicht die Pumpeneinheit gemäß FIG. 2b;
FIG. 5a-d schematisch weitere exemplarische Ausführungsformen des Mehrfarbenpulverzentrums;
FIG. 6 schematisch und in einer isometrischen Ansicht eine dritte exemplarische Ausführungsform des Mehrfarbenpulverzentrums (ohne Pulverbehälter); und
FIG. 7 schematisch und in einer isometrischen Ansicht eine Detaillansicht einer bei der exemplarischen Ausführungsform gemäß FIG. 6 zum Einsatz kommenden Pumpeneinheit.

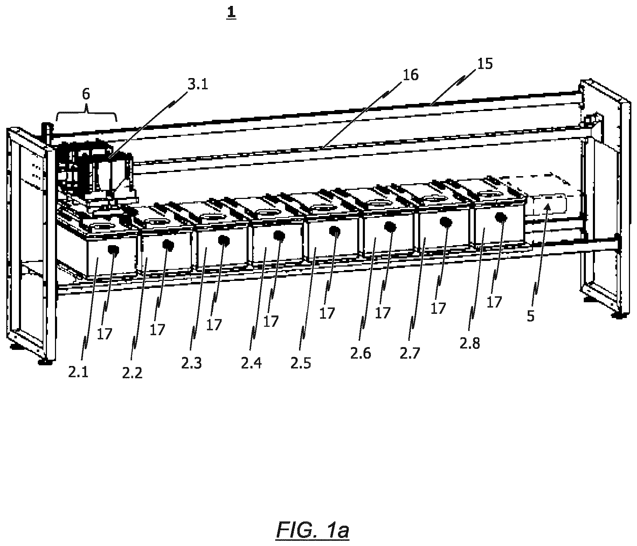

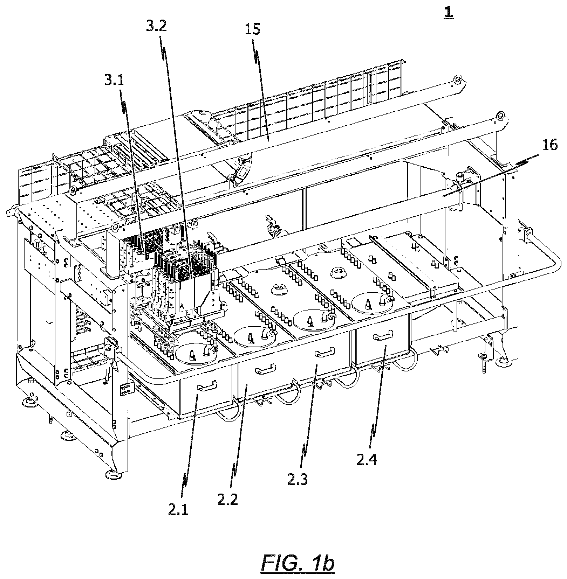

In FIG. 1a und FIG. 1b sind jeweils schematisch und in einer isometrischen Ansicht exemplarische Ausführungsformen des Mehrfarbenpulverzentrums 1 dargestellt.

Kurz zusammengefasst weisen die exemplarische Ausführungsformen dieses Mehrfarbenpulverzentrums 1 jeweils eine Vielzahl (bei FIG. 1a beispielsweise acht) Pulverbehältern 2.1-2.8 auf, welche ausgebildet sind, Beschichtungspulver unterschiedlicher Art aufzunehmen. Gemäß der dargestellten Ausführungsform weist jeder der Vielzahl der Pulverbehälter 2.1-2.8 eine im Wesentlichen quaderförmige Pulverkammer auf zur Aufnahme von entsprechendem Beschichtungspulver.

Der Aufbau der exemplarischen Ausführungsformen des Mehrfarbenpulverzentrums 1 besteht im Einzelnen aus einem Gestell 15 mit mehreren nebeneinander angeordneten Pulverbehältern 2.1-2.8 und einem oberhalb der Pulverbehälter 2.1-2.8 sich bewegenden Wagen (Wagen-/Schlittenanordnung 6), bestehend aus mehreren zu einer Pumpeneinheit 3.1-3.6 zusammengefassten Pulverpumpen 4 (hier: Dichtstrompumpen) und einer sich vertikal bewegenden Andockeinheit 8 mit entsprechender Andockplatte 9.

Die Pulverbehälter 2.1-2.8 sind üblicherweise mit unterschiedlichen Pulversorten gefüllt. Die Pulverbehälter 2.1-2.8 sind aus der Behälterreihe entnehmbar ausgeführt. Führungen und dergleichen sorgen dafür, dass die Position des Pulverbehälters zentriert und indexiert ist. Alle Pulverbehälter 2.1-2.8 sind mit einer zentralen Absaugvorrichtung verbunden, welche einen Überdruck in den Pulverbehältern 2.1-2.8, hervorgerufen durch einen Fluidisierungsprozess des Pulvers, entlüftet. Der Deckel 11 eines jeden Pulverbehälters 2.1-2.8 hat nebst seiner Deckelfunktion integrierte Ansaugrohre mit am oberen Ende platzierten Andockschnittstellen (Anschlüsse 10).

Der angetriebene und genau positionierbare Wagen (Wagen-/Schlittenanordnung 6) mit der Pumpeneinheit 3.1-3.6 und der Andockeinheit 8 fährt längs einer Führungsschiene 16 entlang, und positioniert sich genau oberhalb eines Pulverbehälters 2.1-2.8. Eine vertikale Bewegung der gesamten Andockplatte 9 der Andockeinheit 8 verbindet die Ansaugseiten der Pulverpumpen 4 mit den Ansaugrohren der Pulverbehälter 2.1-2.8. Letzteres ist vorzugsweise eine selbstzentrierende Konstruktion.

Obwohl in den Zeichnungen nicht gezeigt, können so mehrere Pulversprühpistolen gleichzeitig mit dem einen Pulverbehälter 2.1-2.8 verbunden werden. Danach starten die Pulverpumpen 4 mit der Förderung des Pulvers aus dem Pulverbehälter 2.1-2.8 in Richtung der Pistolen.

Bei einem Wechsel des Pulvers (Farbwechsel), dockt sich die Mechanik vom "alten" Pulverbehälter 2.1-2.8 ab und der Wagen (Wagen-/Schlittenanordnung 6) fährt in eine Reinigungsposition, in welcher eine Reinigung, ausgeführt durch mehrere pneumatische Ventile, der pulverführenden Komponenten (in Richtung Pistole wie auch Ansaugschlauch) erfolgt. Danach wird der "neue" Pulverbehälter 2.1-2.8 angefahren.

Die konstante Pulverförderqualität wird mit den Vorzügen insbesondere einer Dichtstrompumpe und deren Integration mit kürzest möglichen Ansaugstrecken in das System erreicht.

In FIG. 1a ist ein Ausführungsbeispiel mit insgesamt acht Pulverbehältern 2.1-2.8 gezeigt. Denkbar ist auch eine Anwendung mit weniger, bis zu nur zwei Pulverbehältern. So ist beispielsweise in FIG. 1b ein Ausführungsbeispiel mit insgesamt vier Pulverbehältern 2.1-2.4 gezeigt.

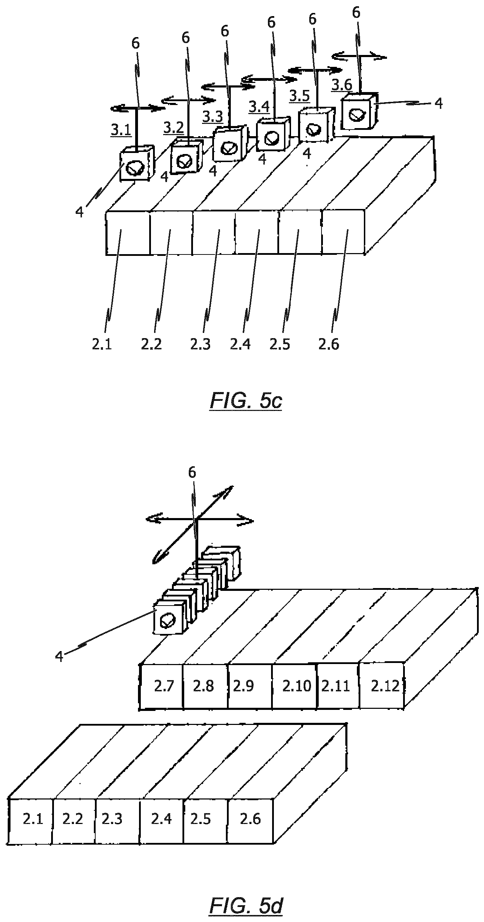

Insbesondere bei mehr als beispielsweise zehn Pulverbehältern kann eine zweite und weitere Reihe parallel zur ersten Behälterreihe aufgestellt werden (vgl. FIG. 5d. Die Behälterreihen sind in diesem Fall auf einem eigenständigen Support am Boden befestigt und das Gestell 15 mit dem Wagen (Wagen-/Schlittenanordnung 6) wird zum Portal, d.h. es wird mit einem weiteren Antrieb ausgestattet und verfährt in X-Richtung zur entsprechenden Behälterreihe.

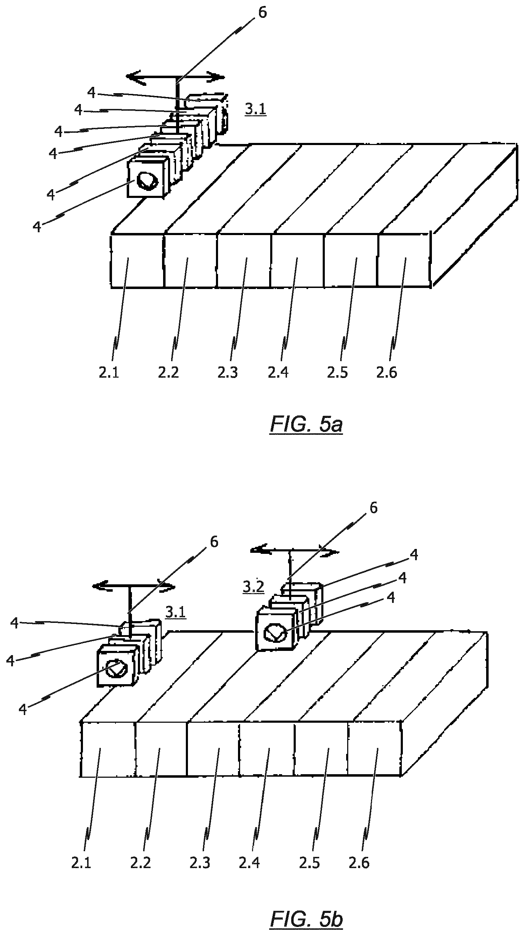

Die in FIG. 5a schematisch gezeigte Variante ist gemäß dem Entwurf gemäß FIG. 1, bei welchem sich eine Pumpeneinheit 3.1 (bzw. Pistole) einer einzigen Pulversorte bedient. Dafür ist eine (einzige) Schlittenanordnung 6 nötig.

Die in FIG. 5b schematisch gezeigte Variante erlaubt Gruppen zu bilden: eine erste Gruppe von Pumpeneinheiten 3.1 bzw. eine erste Pumpeneinheit 3.1 bedient sich einer Pulversorte und eine weitere Gruppe von Pumpeneinheiten 3.2 bzw. eine weitere Pumpeneinheit 3.2 bedient sich gleichzeitig von einer anderen oder gleichen Pulversorte. Dazu sind in diesem Beispiel zwei Schlittenanordnungen 6 nötig. Der praktische Anwendungsfall dahinter ist z.B. zwei Kabinensprühstände mit einem Mehrfarbenpulverzentrum 1 zu versorgen

Bei der in FIG. 5c schematisch gezeigten Variante kann jede einzelne Pumpeneinheit 3.1-3.6 (bzw. Pistole) einer individuellen Pulversorte zugeordnet werden. Dazu ist für jede Pumpeneinheit 3.1-3.6 eine Schlittenanordnung 6 nötig. Beim praktischen Anwendungsfall werden dafür üblicherweise Handpistolen eingesetzt für die Beschichtung von Kleinstmengen (z.B. einzelne Metallmöbelteile, welche nach dem FIFO Prinzip abgearbeitet werden und daher unterschiedliche Farbanforderungen haben)

Für eine große Anzahl an Pulverbehältern 2.1-2.12 bzw. Pulvertypen lässt die in FIG. 5d schematisch gezeigte zusätzlich die komplette Pumpeneinheit 3.1 zu einer weiteren Pulverbehälterreihe fahren.

Obwohl in den Zeichnungen nicht dargestellt, kann in einer Seitenwand eines jeden Pulverbehälters 2.1-2.12 mindestens ein Reinigungsdrucklufteinlass vorgesehen sein, an welchem in einem Reinigungsbetrieb des Pulverbehälters 2.1-2.12 zum Entfernen von Restpulver aus der entsprechenden Pulverkammer über eine Druckluftleitung eine Druckluftquelle anschließbar ist, um Reinigungsdruckluft in die Pulverkammer einzuleiten. Ferner ist es denkbar, dass an der bereits genannten Seitenwand oder Boden des entsprechenden Pulverbehälters 2.1-2.12 ein Restpulverauslass vorgesehen ist, welcher eine Auslassöffnung aufweist, über die mit Hilfe der in die Pulverkammer eingeleiteten Reinigungsdruckluft im Reinigungsbetrieb des Pulverbehälters 2.1-2.12 Restpulver aus der Pulverkammer heraustreibbar ist.

Die jeweiligen Pulverbehälter 2.1-2.12 der in den Zeichnungen dargestellten exemplarischen Ausführungsform des Mehrfarbenpulverzentrums 1 weisen vorzugsweise ferner eine Einlassöffnung zum bedarfsweisen Zuführen von Frischpulver und/oder Recovery Pulver auf. Selbstverständlich ist es in diesem Zusammenhang auch denkbar, für Frischpulver und Recovery Pulver jeweils einen separaten Pulvereinlass vorzusehen.

Vorzugsweise sind den jeweiligen Pulverbehältern 2.1-2.12 der exemplarischen Ausführungsform des Mehrfarbenpulverzentrums 1 jeweils eine Fluidisiereinrichtung zum Einleiten von Fluidisierdruckluft in die entsprechende Pulverkammer zugeordnet. Die Fluidisierdruckluft kann durch eine Stirnwand, Seitenlängswand, Bodenwand oder Deckwand in die entsprechende Pulverkammer eingeleitet werden. Insbesondere bietet es sich an, die Bodenwand der entsprechenden Pulverkammer als Fluidisierboden auszubilden. Der Fluidisierboden sollte eine Vielzahl von offenen Poren oder kleinen Durchgangsöffnungen aufweisen, durch welche Fluidisierdruckluft aus einer unterhalb der Bodenwand angeordneten Fluidisierdruckluftkammer nach oben in die entsprechende Pulverkammer strömen kann, um darin das Beschichtungspulver beim Pulverbeschichtungsbetrieb des Mehrfarbenpulverzentrums 1 in einen Schwebezustand zu versetzen (d. h. zu Fluidisieren), damit es mit Hilfe von einer Pulverabgabeeinrichtung in Gestalt einer Pumpeneinheit 3.1-3.6 leicht absaugbar ist. Die Fluidisierdruckluft wird der Fluidisierdruckluftkammer durch einen Fludisierdrucklufteinlass zugeführt.

Damit bei Betrieb der Fluidisiereinrichtung der Druck innerhalb der entsprechenden Pulverkammer nicht einen vorab festgelegten oder festlegbaren Maximaldruck überschreitet, weist jede Pulverkammer des Mehrfarbenpulverzentrums 1 mindesten einen Fluidisierdruckluftauslass mit einer Auslassöffnung auf zum Abführen der in die Pulverkammer eingeleiteten Fluidisierdruckluft und zum Bewirken eines Druckausgleiches. Insbesondere sollte die Auslassöffnung des mindestens einen Fluidisierdruckluftauslasses einer jeden Pulverkammer der Vielzahl der Pulverbehälter 2.1-2.12 derart dimensioniert sein, dass beim Betrieb der Fluidisiereinrichtung in der entsprechenden Pulverkammer gegenüber dem Atmosphärendruck maximal ein Überdruck von 0,5 bar herrscht.

Auch kann an der Auslassöffnung ein Ventil oder dergleichen angebracht sein, um nur die unter Fluidisierungsdruck stehenden Pulverbehälter zu entlüften.

Zum Abführen der in die jeweiligen Pulverkammern der Pulverbehälter 2.1-2.12 eingeführten Fluidisierdruckluft ist vorzugsweise eine zentrale, die Pulverkammern verbindende Entlüftungsleitung vorgesehen, welche zu einer zentralen Absauganlage führt.

Bei der in FIG. 1a schematisch dargestellten exemplarischen Ausführungsform weist jeder Pulverbehälter 2.1-2.8 einen vorzugsweise berührungslos arbeitenden Niveausensor 17 auf, um das maximal zulässige Pulverniveau in der entsprechenden Pulverkammer zu detektieren. Denkbar hierbei ist es, einen weiteren Niveausensor 17 vorzusehen, welcher im Hinblick auf den Pulverbehälter 2.1-2.12 derart angeordnet ist, um eine minimales Pulverniveau zu detektieren, und, sobald dieses minimale Pulverniveau erreicht bzw. unterschritten wird, eine entsprechende Meldung an ein Steuergerät abzugeben, um der entsprechenden Pulverkammer vorzugsweise automatisch Frischpulver oder Recovery Pulver über eine Einlassöffnung zuzuführen.

Vorzugsweise ist der Niveausensor 17 zum Detektieren des Pulverniveaus in der entsprechenden Pulverkammer ein berührungslos arbeitender Niveausensor 17 und außerhalb der Pulverkammer getrennt von ihr angeordnet. Dadurch wird eine Verschmutzung des Niveausensors 17 verhindert. Der Niveausensor 17 erzeugt ein Signal, wenn das Pulverniveau eine bestimmte Höhe erreicht hat. Es können auch mehrere solche Pulverniveausensoren auf verschiedenen Höhen angeordnet sein, beispielsweise zum Detektieren von vorbestimmten maximalen Niveaus und zum Detektieren eines vorbestimmten minimalen Niveaus.

Die Signale des mindestens einen Niveausensors 17 werden vorzugsweise zum Steuern einer automatischen Pulverzufuhr von Beschichtungspulver durch entsprechende Pulvereinlässe in die entsprechenden Pulverkammern verwendet, um darin ein vorbestimmtes Niveau oder einen vorbestimmten Niveaubereich auch während der Zeitdauer aufrecht zu erhalten, während die Pumpeneinheit 3.1-3.6 Beschichtungspulver aus der entsprechenden Pulverkammer absaugt und pneumatisch zu Pulversprüheinrichtungen oder eine einzelne Pulversprüheinrichtung (oder in anderen Behältern) fördern.

Während eines solchen Pulversprühbeschichtungsbetriebes wird Reinigungsdruckluft nicht oder nur mit reduziertem Druck in die entsprechenden Pulverkammern geleitet.

Obwohl in den Zeichnungen nicht explizit dargestellt, ist es ferner denkbar, eine Einrichtung zum Messen oder Bestimmen des in den jeweiligen Pulverkammern herrschenden Luftdruckes vorzusehen. Dies ist insofern wichtig, in wie fern Sorge zu tragen ist, dass sich im Inneren der entsprechenden Pulverbehälter 2.1-2.12 durch das Einleiten von Fluidisierdruckluft im Pulverbeschichtungsbetrieb des Mehrfarbenpulverzentrums 1 kein zu hoher Überdruck aufbauen kann, da in der Regel die Pulverbehälter 2.1-2.12 nicht als Hochdruckbehälter ausgeführt sind. Insofern ist es bevorzugt, wenn der maximal in der Pulverkammer zulässige Überdruck den Wert von 0,5 bar nicht überschreitet.

Bei der zuletzt genannten Ausführungsform ist es insbesondere denkbar, dass der in der entsprechenden Pulverkammer der einzelnen Pulverbehälter 2.1-2.12 gemessene Luftdruck kontinuierlich oder zu vorgegebenen Zeiten bzw. Ereignissen einem Steuergerät zugeführt wird, wobei vorzugsweise automatisch die Menge die pro Zeiteinheit der Pulverkammer zugeführte Fluidisierdruckluft und/oder die Menge der pro Zeiteinheit aus der Pulverkammer über den mindestens einen Fluidisierdruckluftauslass abgeführten Fluidisierdruckluft in Abhängigkeit von dem in der Pulverkammer herrschenden Luftdruck eingestellt werden/wird. Im Reinigungsbetrieb des Mehrfarbenpulverzentrums 1 hingegen ist es bevorzugt, wenn mit Hilfe des Steuergerätes in Menge der pro Zeiteinheit der jeweiligen Pulverkammer zugeführten Reinigungsdruckluft und/oder die Menge der pro Zeiteinheit über den mindestens einen Restpulverauslass abgeführten Reinigungsdruckluft in Abhängigkeit von dem in der Pulverkammer herrschenden Luftdruck vorzugsweise automatisch eingestellt werden/wird.

Das Mehrfarbenpulverzentrum 1, wie es gemäß einer exemplarischen Ausführungsform in den beiliegenden Zeichnungen gezeigt ist, weist mindestens eine Pumpeneinheit 3.1-3.6 auf. Bei der in den Zeichnungen exemplarisch dargestellten Ausführungsform umfasst die Pumpeneinheit 3.1-3.6 eine Vielzahl von Dichtstrompulverpumpen, die vorzugsweise individuell über das genannte Steuergerät ansteuerbar sind und jeweils einen Pulvereinlass zum bedarfsweisen Ansaugen von Beschichtungspulver aus einem der Pulverbehälter 2.1-2.12 sowie einen Pulverauslass aufweisen. Die jeweiligen Pulverlauslässe der Pulverpumpen 4 der Pumpeneinheit 3.1-3.6 sind strömungsmäßig mit jeweils einer Pulversprüheinrichtung verbunden oder verbindbar.

Wie schematisch dargestellt, ist der Pumpeneinheit 3.1-3.6 eine Wagen- oder Schlittenanordnung 6 zugeordnet, mit Hilfe welcher die Pumpeneinheit 3.1-3.6 in einer horizontalen Ebene und oberhalb der jeweiligen Pulverbehälter 2.1-2.12 relativ zu diesen geführt bewegbar ist. Zu diesem Zweck weist die der Pumpeneinheit 3.1-3.6 zugeordnete Wagen- oder Schlittenanordnung 6 einen entsprechenden Linearantrieb auf, der über das genannten Steuergerät ansteuerbar und im Hinblick auf die jeweiligen Pulverbehälter 2.1-2.12 des Mehrfarbenpulverzentrums 1 positionierbar ist.

Der Pumpeneinheit 3.1-3.6 ist ferner eine Vertikalführungseinheit zugeordnet, um bedarfsweise die Pumpeneinheit 3.1-3.6 bzw. Teile hiervon in vertikaler Richtung relativ zu den Pulverbehältern 2.1-2.12 des Mehrfarbenpulverzentrums 1 bewegen zu können.

Gemäß der in den Zeichnungen schematisch dargestellten Ausführungsform des Mehrfarbenpulverzentrums 1 weist die Pumpeneinheit 3.1-3.6 eine Andockeinheit 8 auf, über welche die Pulvereinlässe (Saugseiten) der zu der Pumpeneinheit 3.1-3.6 gehörenden Pulverpumpen 4 bedarfsweise mit dem Inneren eines der Pulverbehälter 2.1-2.12 strömungsmäßig verbindbar ist. Zu diesem Zweck ist der Andockeinheit 8 eine Vertikalführungseinheit zugeordnet, mit welcher die Andockeinheit 8 in vertikaler Richtung relativ zu den jeweiligen Pulverpumpen 4 der Pumpeneinheit 3.1-3.6 und den Pulverbehältern 2.1-2.12 bedarfsweise bewegbar ist.

Die Andockeinheit 8 ist in vertikaler Richtung relativ zu der Pumpeneinheit 3.1-3.6 sowie relativ zu dem Pulverbehälter 2.1-2.12 bedarfsweise bewegbar zum strömungsmäßigen Verbinden oder strömungsmäßigen Trennen der Saugseite der mindestens einen Pulverpumpe 4 mit bzw. von dem Inneren des Pulverbehälters 2.1-2.12.

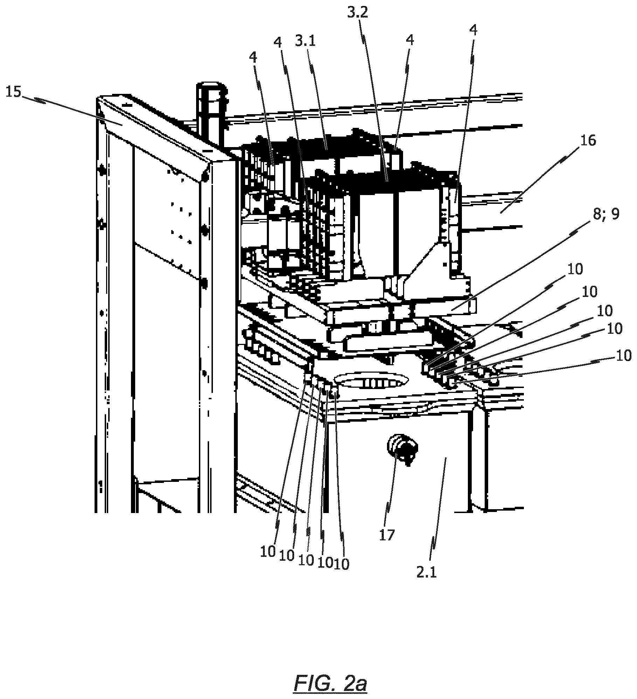

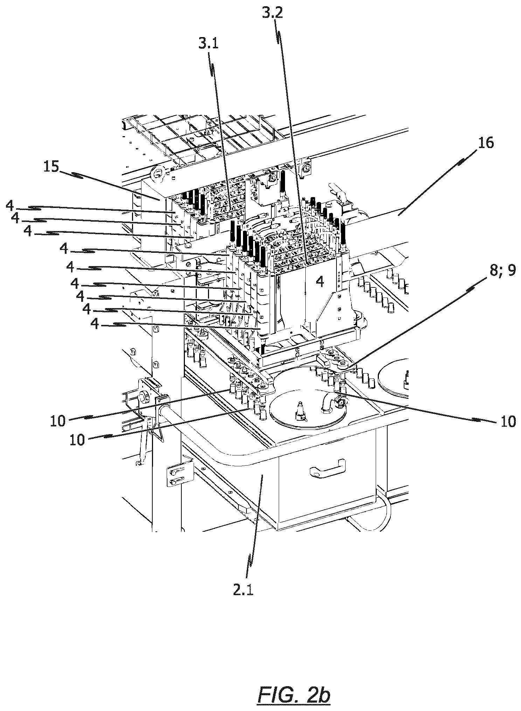

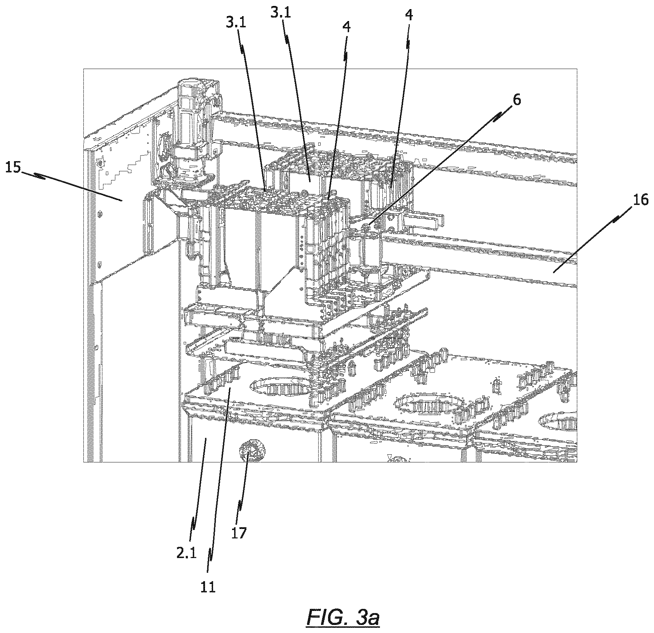

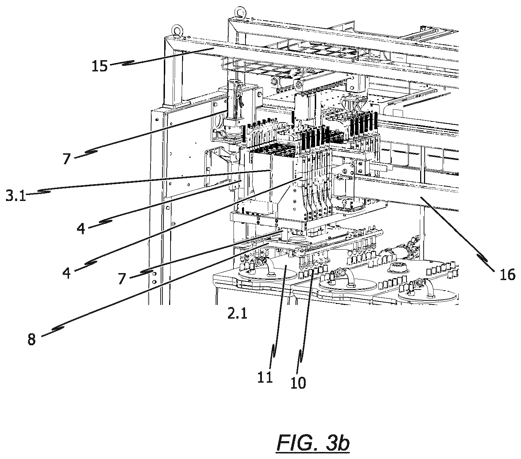

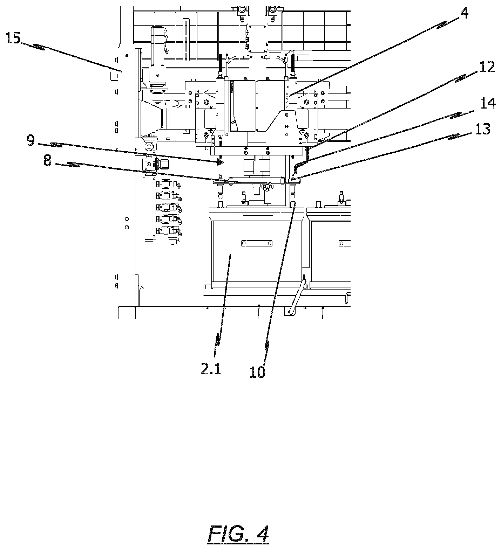

Wie es den Detaildarstellungen in FIGs. 2a bis 4 entnommen werden kann, weisen die Pulverbehälter 2.1-2.8 jeweils mindestens einen vorzugsweise in einem Ansaugrohr ausgebildeten Ansaugkanal aufweist, welcher eine in das Innere des Pulverbehälters 2.1-2.8 mündende Ansaugöffnung und eine gegenüberliegende Abgabeöffnung aufweist, welche in einem Anschluss 10 mündet, wobei die Saugseite der mindestens einen Pulverpumpe 4 über die Andockeinheit 8 strömungsmäßig mit dem Anschluss 10 des Pulverbehälters 2.1-2.12 verbindbar ist. Der Anschluss 10 ist in einem oberen Bereich und insbesondere in einem Deckelbereich 11 des Pulverbehälters 2.1-2.8 angeordnet, und zwar derart, dass der Anschluss 10 über die Andockeinheit 8 mit der Saugseite der mindestens einen Pulverpumpe 4 der Pumpeneinheit 3.1-3.6 strömungsmäßig verbindbar ist.

Wie dargestellt, weist die Andockeinheit 8 einen der Saugseite der mindestens einen Pumpeneinheit 3.1-3.6 zugeordneten ersten Anschluss 12 und mindestens einen dem Pulverbehälter 2.1-2.12 zugeordneten zweiten Anschluss 13 auf, wobei der erste Anschluss 12 über einen Leitungsabschnitt 14 strömungsmäßig mit dem zweiten Anschluss 13 verbunden ist, und wobei der Leitungsabschnitt 14 derart flexibel ausgeführt ist, dass der zweite Anschluss 13 relativ zu dem ersten Anschluss 12 über eine vorab festgelegte Wegstrecke bewegbar ist. Die vorab festgelegte Wegstrecke entspricht hier einem vertikalen Abstand zwischen dem zweiten Anschluss 13 der Andockeinheit 8 und einem Anschluss 10 des Pulverbehälters 2.1-2.12.

Der zweite Anschluss 13 der Andockeinheit 8 ist derart komplementär zu einem Anschluss 10 des Pulverbehälters 2.1-2.12 ausgeführt, dass dieser mit dem Anschluss 10 des Pulverbehälters 2.1-2.12 derart verbindbar ist, dass die mindestens eine Pulverpumpe 4 der Pumpeneinheit 3.1-3.6 strömungsmäßig mit einer entsprechenden Ansaugöffnung eines dem Pulverbehälter 2.1-2.12 zugeordneten Ansaugkanals verbindbar ist.

Insbesondere sind/ist der zweite Anschluss 13 der Andockeinheit 8 und/oder der Anschluss 10 des Pulverbehälters 2.1-2.12 als vorzugsweise selbstschließende Schlauchkupplung, insbesondere selbstzentrierende und dichtende Kupplung, ausgeführt.

Obwohl in den Zeichnungen nicht detailliert dargestellt, ist es von Vorteil, wenn ferner eine Reinigungsstation 5 vorgesehen ist, um bedarfsweise die Pumpeneinheit 3.1-3.6 bzw. die zu der Pumpeneinheit 3.1-3.6 gehöhrenden Komponenten reinigen zu können, insbesondere bei einem Wechsel von einer ersten Pulverart auf einer hiervon verschiedene zweite Pulverart.

Zu diesem Zweck bietet es sich an, wenn die Pumpeneinheit 3.1-3.6 derart relativ zu der Reinigungsstation 5 bewegbar ist, dass diese bedarfsweise in der Reinigungsstation 5 gereinigt und insbesondere mit Reinigungsdruckluft gespült werden kann.

Im Rahmen dieser Reinigung ist es ferner denkbar, dass mit Hilfe der Reinigungsstation 5 nicht nur die Pumpeneinheit 3.1-3.6 und die zu der Pumpeneinheit 3.1-3.6 gehörenden Komponenten, insbesondere Pulverpumpen 4, sondern auch die Leitungssysteme gereinigt werden können, welche von der Pumpeneinheit 3.1-3.6 bzw. den Pulverpumpen 4 zu den Pulversprüheinrichtungen führen. Ferner ist es von Vorteil, wenn mit der Reinigungsstation 5 auch zumindest teilweise die Pulversprüheinrichtung, welche dem Mehrfarbenpulverzentrum 1 zugeordnet sind, gereinigt werden können.

Insbesondere ist es von Vorteil, wenn die der Pumpeneinheit 3.1-3.6 zugeordnete Andockeinheit 8 ausgebildet ist, bedarfsweise die Saugseite der mindestens einen Pulverpumpe 4 mit einem Reinigungsanschluss der Reinigungsstation 5 strömungsmäßig zu verbinden.

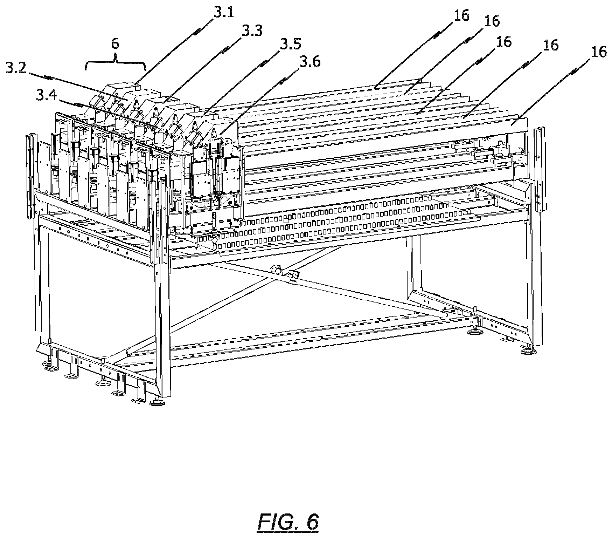

In FIG. 6 ist schematisch und in einer isometrischen Ansicht eine weitere exemplarische Ausführungsform des Mehrfarbenpulverzentrums 1 gezeigt, wobei allerdings der Übersichtlichkeit halber die Pulverbehälter sowie die Reinigungsstation nicht dargestellt sind.

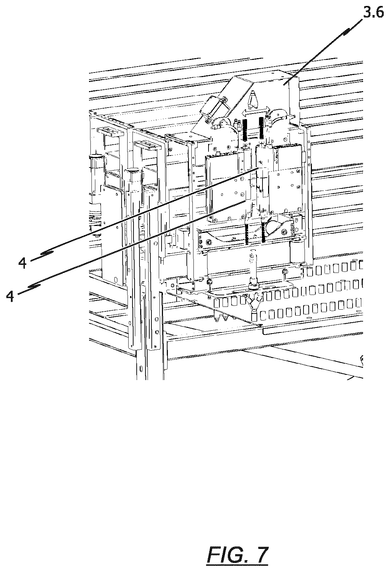

In FIG. 7 ist schematisch und in einer isometrischen Ansicht eine Detailansicht einer bei der exemplarischen Ausführungsform gemäß FIG. 6 zum Einsatz kommenden Pumpeneinheit 3.1 gezeigt.

Kurz zusammengefasst zeichnet sich die Lösung insbesondere dadurch aus, dass sehr flexibel und insbesondere während eines laufenden Beschichtungsbetriebes, d.h. schnellstmöglich, ein Farbwechsel vorgenommen werden kann, wobei gleichzeitig die Qualität der Pulverzufuhr sichergestellt ist. Insbesondere ist ein Farbwechsel in einer Zeitperiode von maximal 45 Sekunden durchführbar, wobei das Mehrfarbenpulverzentrum 1 eine Vielzahl von unterschiedlichen Farben oder Pulverarten, beispielsweise insgesamt acht oder mehr Pulverfarben oder Pulverarten, gleichzeitig bereitstellen kann.

Die Pulverpumpen 4 der Pumpeneinheiten 3.1-3.6 gewährleisten, dass von dem Mehrfarbenpulverzentrum 1 gleichzeitig eine Vielzahl von Sprühbeschichtungseinrichtungen, wie beispielsweise Pulversprühpistolen, versorgt werden können. Gemäß bevorzugten Realisierungen des Mehrfarbenpulverzentrums sind bis zu 24 Sprühpistolen mit den entsprechenden Pulverpumpen des Mehrfarbenzentrums verbunden.

Die einzelnen Pulverbehälter sind vorzugsweise mit einem Fluidisiersystem ausgerüstet, wobei über ein vorzugsweise zentralisiertes Entlüftungssystem die einzelnen Pulverbehälter entlüftet werden.

Die Erfindung ist nicht auf die in den Zeichnungen dargestellten exemplarischen Ausführungsformen beschränkt, sondern ergibt sich aus einer Zusammenschau sämtlicher hierin offenbarter Merkmale.

Gemäß Realisierungen des Mehrfarbenpulverzentrums 1 ist vorgesehen, dass dem Mehrfarbenpulverzentrum 1 ein Recoverypulver-Rückführsystem zugeordnet ist zum bedarfsweisen Rückführen von Recoverypulver in mindestens einen der Pulverbehälter 2.1-2.12. Das Recoverypulver-Rückführsystem kann mindestens eine Rückführleitung insbesondere in Gestalt eines Rückführschlauches aufweisen, welcher insbesondere bedarfsweise strömungsmäßig mit einer Pulverbeschichtungskabine oder einem Pulverbeschichtungsarbeitsplatz einerseits und einem der Pulverbehälter 2.1-2.12 verbunden oder verbindbar ist zum Rückführen von Recoverypulver in den entsprechenden Pulverbehälter 2.1-2.12.

Die mindestens eine Rückführleitung des Recoverypulver-Rückführsystems kann an einer Wagen- oder Schlittenanordnung relativ zu den Pulverbehältern 2.1-2.12 bewegbar, insbesondere horizontal bewegbar angeordnet sein.

Alternativ oder zusätzlich hierzu kann die mindestens eine Rückführleitung relativ zu den Pulverbehältern 2.1-2.12 bewegbar, insbesondere vertikal bewegbar sein zum Ausbilden einer strömungsmäßigen Verbindung mit dem entsprechenden Pulverbehälter 2.1-2.12.

Auch ist es denkbar, wenn dem Mehrfarbenpulverzentrum 1 ein Pulverbehälter-Entlüftungssystem zugeordnet ist zum bedarfsweisen Entlüften der Pulverbehälter 2.1-2.12. Das Pulverbehälter-Entlüftungssystem kann mindestens eine Entlüftungsleitung insbesondere in Gestalt eines Entlüftungsschlauches aufweisen, welcher insbesondere bedarfsweise oder dauerhaft strömungsmäßig mit den Pulverbehältern 2.1-2.12 verbunden ist zum Entlüften der Pulverbehälter 2.1-2.12. Hierbei kann die mindestens eine Entlüftungsleitung an einer Wagen- oder Schlittenanordnung relativ zu den Pulverbehältern 2.1-2.12 bewegbar, insbesondere horizontal bewegbar sein.

## Patentansprüche

1. Mehrfarbenpulverzentrum (1) zum bedarfsweisen Versorgen von mindestens einer Pulversprüheinrichtung mit Beschichtungspulver unterschiedlicher Art, wobei das Mehrfarbenpulverzentrum (1) Folgendes aufweist:
- einen ersten Pulverbehälter (2.1) zur Aufnahme von Beschichtungspulver einer ersten Art;
- mindestens einen zweiten Pulverbehälter (2.2-2.12) zur Aufnahme von Beschichtungspulver einer zweiten Art; und
- mindestens eine Pumpeneinheit (3.1-3.6) mit mindestens einer Pulverpumpe (4) in Gestalt einer Dichtstrompulverpumpe, deren Druckseite strömungsmäßig mit dem Pulvereinlass einer Pulversprüheinrichtung verbunden oder verbindbar ist,
wobei der erste und der mindestens eine zweite Pulverbehälter (2.1-2.12) jeweils einen vorzugsweise in einem Ansaugrohr ausgebildeten Ansaugkanal aufweist, welcher eine in das Innere des Pulverbehälters (2.1-2.12) mündende Ansaugöffnung und eine gegenüberliegende Abgabeöffnung aufweist, welche in einem Anschluss (10) mündet, wobei die Saugseite der mindestens einen Pulverpumpe (4) strömungsmäßig mit dem Anschluss (10) des entsprechenden Pulverbehälters (2.1-2.12) verbindbar ist;
wobei die Pulverkammer des ersten und des mindestens einen zweiten Pulverbehälters (2.1-2.12) jeweils mindestens einen Fluidisierdruckluftauslass mit einer Auslassöffnung aufweist zum Abführen der in die Pulverkammer eingeleiteten Fluidisierdruckluft;
wobei der Fluidisierdruckluftauslass eine Entlüftungsleitung aufweist, welche außerhalb des entsprechenden Pulverbehälters (2.1-2.12) mit einem Steigrohr verbunden oder verbindbar ist zum Verhindern eines Pulveraustrags aus der Pulverkammer des ersten und des mindestens einen zweiten Pulverbehälters (2.1-2.12) in einem Pulverbeschichtungsbetrieb des Mehrfarbenpulverzentrums (1);
wobei die mindestens einen Pumpeneinheit (3.1-3.6) eine Andockeinheit (8) aufweist, über welche die Saugseite der mindestens einen Pulverpumpe (4) bedarfsweise mit dem Inneren des ersten oder des mindestens einen zweiten Pulverbehälters (2.1-2.12) strömungsmäßig verbindbar ist, wobei der Andockeinheit (8) eine Vertikalführungseinheit zugeordnet ist zum bedarfsweisen Bewegen der Andockeinheit (8) in vertikaler Richtung relativ zu dem ersten und dem mindestens einen zweiten Pulverbehälter (2.1-2.12) und relativ zu der mindestens einen Pulverpumpe (4) der mindestens einen Pumpeneinheit (3.1-3.6) zum strömungsmäßigen Verbinden der Saugseite der mindestens einen Pulverpumpe (4) mit dem Inneren des ersten oder des mindestens einen zweiten Pulverbehälters (2.1-2.12), wobei der mindestens einen Pumpeneinheit (3.1-3.6) eine Wagen- oder Schlittenanordnung (6) zugeordnet ist, mit Hilfe welcher die Pumpeneinheit (3.1-3.6) mit der Andockeinheit (8) in einer horizontalen Ebene und oberhalb der Pulverbehälter (2.1-2.12) sowie relativ zu diesen geführt bewegbar ist.

2. Mehrfarbenpulverzentrum (1) nach Anspruch 1,
wobei der Anschluss (10) jeweils in einem oberen Bereich und insbesondere in einem Deckelbereich (11) des ersten und des mindestens einen zweiten Pulverbehälters (2.1-2.12) angeordnet ist, und zwar derart, dass der Anschluss (10) mit der Saugseite der mindestens einen Pulverpumpe (4) der Pumpeneinheit (3.1-3.6) strömungsmäßig verbindbar ist.

3. Mehrfarbenpulverzentrum (1) nach Anspruch 1 oder 2,
wobei der mindestens eine Ansaugkanal in einem in das Innere jeweils des ersten und des mindestens einen zweiten Pulverbehälters (2.1-2.12) hineinragenden Tauchrohr ausgebildet ist; oder
wobei der mindestens eine Ansaugkanal in einer Seitenwand jeweils des ersten und des mindestens einen zweiten Pulverbehälters (2.1-2.12) ausgebildet ist.

4. Mehrfarbenpulverzentrum (1) nach einem der Ansprüche 1 bis 3,
wobei zur Vergrößerung des effektiven Strömungsquerschnitts jeweils die in das Innere des ersten und des mindestens einen zweiten Pulverbehälters (2.1-2.12) mündende Ansaugöffnung des Ansaugkanals eine elliptische Form aufweist; und/oder
wobei der erste und der mindestens eine zweite Pulverbehälter (2.1-2.12) jeweils eine im Wesentlichen quaderförmige oder zylinderförmige Pulverkammer für Beschichtungspulver und eine Fluidisiereinrichtung zum Einleiten von Fluidisierdruckluft in die Pulverkammer aufweisen.

5. Mehrfarbenpulverzentrum (1) nach einem der Ansprüche 1 bis 4,
wobei in einer Seitenwand oder in einem Deckel jeweils des ersten und des mindestens einen zweiten Pulverbehälters (2.1-2.12) mindestens eine in das Innere des Pulverbehälters (2.1-2.12) mündende Einlassöffnung vorgesehen ist zum bedarfsweisen Zuführen von Beschichtungspulver aus einem Pulverrückführkreislauf oder aus einem außerhalb des Mehrfarbenzentrums (1) befindenden Frischpulverbehältnis oder zum manuellen Zugeben von Pulver in einem Pulverbeschichtungsbetrieb des Mehrfarbenpulverzentrums (1) oder wahlweise zum Einleiten von Reinigungsdruckluft in einem Reinigungsbetrieb des Mehrfarbenpulverzentrums (1) bzw. des ersten und des mindestens einen zweiten mindestens einen Pulverbehälters (2.1-2.12); und/oder
wobei ferner jeweils mindestens ein aus dem Inneren des ersten und des mindestens einen zweiten Pulverbehälters (2.1-2.12) herausführende Auslass vorgesehen ist zum Abführen von in die Pulverkammer des ersten und des mindestens einen zweiten Pulverbehälters (2.1-2.12) eingeleiteter Fluidisierdruckluft oder wahlweise zum Abführen von in einem Reinigungsbetrieb in die Pulverkammer eingeleiteter Reinigungsluft gegebenenfalls zusammen mit von der Reinigungsdruckluft mit transportiertem Restpulver; und/oder
wobei der mindestens eine Fluidisierdruckluftauslass eine Entlüftungsleitung aufweist, welcher einerseits mit der Auslassöffnung des Fluidisierdruckluftauslasses verbunden oder verbindbar ist und andererseits in einen Absaugtrichter einer vorzugsweise als Luftmengenverstärker ausgebildeten Absauganlage mündet.

6. Mehrfarbenpulverzentrum (1) nach einem der Ansprüche 1 bis 5,
wobei ferner mindestens ein Niveausensor (17) vorgesehen ist zum Detektieren von mindestens einem Pulverniveau jeweils im Inneren des ersten und des mindestens einen zweiten Pulverbehälters (2.1-2.12).

7. Mehrfarbenpulverzentrum (1) nach Anspruch 6,
wobei der mindestens eine Niveausensor (17) ein berührungslos arbeitender Niveausensor ist, welcher außerhalb des Pulverbehälters (2.1-2.12) getrennt vom Inneren des Pulverbehälters (2.1-2.12) angeordnet ist.

8. Mehrfarbenpulverzentrum (1) nach einem der Ansprüche 1 bis 7,
wobei ferner mindestens eine Einrichtung zum Messen des jeweils im Inneren des ersten und des mindestens einen zweiten Pulverbehälters (2.1-2.12) herrschenden Luftdruckes vorgesehen ist, wobei vorzugsweise ferner mindestens ein Aspekt der nachfolgend genannten Aspekt vorgesehen ist:
wobei die Menge einer pro Zeiteinheit dem ersten und dem mindestens einen zweiten Pulverbehälter (2.1-2.12) zugeführten Fluidisierdruckluft in Abhängigkeit von dem im Inneren des in dem betreffenden Pulverbehälter (2.1-2.12) herrschenden Luftdruck vorzugsweise automatisch einstellbar ist; und/oder
wobei die Menge einer pro Zeiteinheit dem ersten und dem mindestens einen zweiten Pulverbehälter (2.1-2.12) zugeführten Reinigungsdruckluft in Abhängigkeit von dem im Inneren des entsprechenden Pulverbehälters (2.1-2.12) herrschenden Luftdruck vorzugsweise automatisch einstellbar ist; und/oder
wobei die Menge einer pro Zeiteinheit aus dem ersten und dem mindestens einen zweiten Pulverbehälter (2.1-2.12) abgeführten Fluidisierdruckluft in Abhängigkeit von dem im Inneren des entsprechenden Pulverbehälters (2.1-2.12) herrschenden Luftdruck vorzugsweise automatisch einstellbar ist; und/oder
wobei die Menge einer pro Zeiteinheit über mindestens einen Restpulverauslass abgeführten Reinigungsdruckluft jeweils in Abhängigkeit von dem im Inneren des ersten und des mindestens einen zweiten Pulverbehälters (2.1-2.12) herrschenden Luftdruck vorzugsweise automatisch einstellbar ist.

9. Mehrfarbenpulverzentrum (1) nach einem der Ansprüche 1 bis 8, wobei der erste und der mindestens eine zweite Pulverbehälter (2.1-2.12) jeweils folgendes aufweisen:
- eine Niveausonde zur Füllstandsüberwachung und entsprechender Kommunikation; und/oder
- eine Fluidisierung bzw. Vorkonditionierung des Pulvers; und/oder
- ein integriertes Sieb; und/oder
- eine integrierte Vibrationseinheit; und/oder
- eine Sensorik zur Erfassung der korrekten Positionierung des Pulverbehälters (2.1-2.12); und/oder
- eine Anbindung an ein weiteres oder größeres Frischpulverbehältnis außerhalb des Mehrfarbenzentrums zum automatischen Nachfüllen von Pulver.

10. Mehrfarbenpulverzentrum (1) nach einem der Ansprüche 1 bis 9,
wobei dem Mehrfarbenpulverzentrum (1) ein Recoverypulver-Rückführsystem zugeordnet ist zum bedarfsweisen Rückführen von Recoverypulver in den ersten Pulverbehälter (2.1) und/oder in den mindestens einen zweiten Pulverbehälter (2.2-2.12).

11. Mehrfarbenpulverzentrum (1) nach Anspruch 10,
wobei das Recoverypulver-Rückführsystem mindestens eine Rückführleitung insbesondere in Gestalt eines Rückführschlauches aufweist, welcher insbesondere bedarfsweise strömungsmäßig mit einer Pulverbeschichtungskabine einerseits und dem ersten Pulverbehälter (2.1) und/oder in dem mindestens einen zweiten Pulverbehälter (2.2-2.12) verbunden oder verbindbar ist zum Rückführen von Recoverypulver in den entsprechenden Pulverbehälter (2.1; 2.2-2.12).

12. Mehrfarbenpulverzentrum (1) nach Anspruch 11,
wobei die mindestens eine Rückführleitung an einer Wagen- oder Schlittenanordnung relativ zu dem ersten Pulverbehälter (2.1) und/oder dem mindestens einen zweiten Pulverbehälter (2.2-2.12) bewegbar, insbesondere horizontal bewegbar ist; und/oder
wobei die mindestens eine Rückführleitung relativ zu dem ersten Pulverbehälter (2.1) und/oder dem mindestens einen zweiten Pulverbehälter (2.2-2.12) bewegbar, insbesondere vertikal bewegbar ist zum Ausbilden einer strömungsmäßigen Verbindung mit dem entsprechenden Pulverbehälter (2.1; 2.2-2.12).

13. Mehrfarbenpulverzentrum (1) nach einem der Ansprüche 1 bis 12,
wobei dem Mehrfarbenpulverzentrum (1) ein Pulverbehälter-Entlüftungssystem zugeordnet ist zum bedarfsweisen Entlüften des ersten Pulverbehälters (2.1) und/oder des mindestens einen zweiten Pulverbehälters (2.2-2.12).

14. Mehrfarbenpulverzentrum (1) nach Anspruch 13,
wobei das Pulverbehälter-Entlüftungssystem mindestens eine Entlüftungsleitung insbesondere in Gestalt eines Entlüftungsschlauches aufweist, welcher insbesondere bedarfsweise oder dauerhaft strömungsmäßig mit dem ersten Pulverbehälter (2.1) und/oder dem mindestens einen zweiten Pulverbehälter (2.2-2.12) verbunden ist zum Entlüften des entsprechenden Pulverbehälters (2.1; 2.2-2.12).

15. Mehrfarbenpulverzentrum (1) nach Anspruch 14,
wobei die mindestens eine Entlüftungsleitung an einer Wagen- oder Schlittenanordnung relativ zu dem ersten Pulverbehälter (2.1) und/oder dem mindestens einen zweiten Pulverbehälter (2.2-2.12) bewegbar, insbesondere horizontal bewegbar ist.

## Claims

1. A multicolor powder center (1) for supplying at least one powder spraying device with different types of coating powder as required, wherein the multicolor powder center (1) comprises the following:
- a first powder container (2.1) for accommodating coating powder of a first type;
- at least a second powder container (2.2-2.12) for accommodating coating powder of a second type; and
- at least one pump unit (3.1-3.6) having at least one powder pump (4), in form of dense phase powder pump, the pressure side of which is fluidly connected or connectable to a powder inlet of a powder spraying device,
wherein the first and the at least one second powder container (2.1-2.12) comprises at least one intake duct preferably formed in an inlet tube which has an intake opening which opens into the interior of the powder container (2.1-2.12) and an oppositely disposed delivery opening which opens into a connection (10), wherein the suction side of the at least one powder pump (4) is fluidly connectable to the connection (10) of the respective powder container (2.1-2.12);
wherein the powder chamber of the first and the at least one second powder container (2.1-2.12) each has at least one fluidizing compressed air outlet with an outlet opening for discharging fluidizing compressed air introduced into said powder chamber; and
wherein the fluidizing compressed air outlet has a vent line which is connected or connectable to a riser pipe outside of the respective powder container (2.1-2.12) to prevent discharge of powder from the powder chamber of the first and the at least one second powder container (2.1-2.12) during a powder coating operation of the multicolor powder center (1);
wherein the at least one pump unit (3.1-3.6) has a docking unit (8) via which the suction side of the at least one powder pump (4) can be connected to the interior of the first or the at least one second powder container (2.1-2.12) as required, wherein the docking unit (8) is assigned a vertical guide unit for moving the docking unit (8) in the vertical direction relative to the first and the at least one second powder container (2.1-2.12) as required and relative to the at least one powder pump (4) of the at least one pump unit (3.1-3.6) for fluidly connecting the suction side of the at least one powder pump (4) to the interior of the first or the at least one second powder container (2.1-2.12),
wherein the at least one pump unit (3.1-3.6) is associated with a carriage or slide assembly (6), by means of which the pump unit (3.1-3.6) is movable in a guided way with the docking unit (8) in a horizontal plane and above the powder containers (2.1-2.12) and relative to them.

2. The multicolor powder center (1) according to claim 1,
wherein each connection (10) is arranged in a upper region and in particular in a cover area (11) of the first and the at least one second powder container (2.1-2.12) and that in such a way that the connection (10) is fluidly connectable to the suction side of the at least one powder pump (4) of the pump unit (3.1-3.6).

3. The multicolor powder center (1) according to claim 1 or 2,
wherein the at least one intake duct is formed in a dip tube extending into the interior of the first and the at least one second powder container (2.1-2.12); or
wherein the at least one intake duct is formed in a side wall of the first and the at least one second powder container (2.1-2.12).

4. The multicolor powder center (1) according to one of claims 1 to 3,
wherein each intake opening of the intake duct opening into the interior of the first and the at least one second powder container (2.1-2.12) exhibits an elliptical shape in order to increase the effective flow area; and/or
wherein the first and the at least one second powder container (2.1-2.12) each exhibits a substantially rectangular or cylindrical powder chamber for coating powder and a fluidizing device for introducing fluidizing compressed air into the powder chamber.

5. The multicolor powder center (1) according to one of claims 1 to 4,
wherein at least one inlet opening which opens into the interior of the powder container (2.1-2.12) is provided in a side wall or in a cover of the first and the at least one second powder container (2.1-2.12) for supplying coating powder as needed from a powder recirculation circuit or from a fresh powder container external of the multicolor powder center (1), or for manually adding powder during a powder coating operation of the multicolor powder center (1), or for selectively introducing compressed cleaning air during a cleaning operation of the multicolor powder center (1) or the first and the at least one second powder container (2.1-2.12) respectively; and/or
wherein at least one outlet extending out of the interior of the first and the at least one second powder container (2.1-2.12) is further provided for discharging fluidizing compressed air introduced into the powder chamber of the first and the at least one second powder container (2.1-2.12) or for selectively discharging cleaning air introduced into the powder chamber during a cleaning operation together with any possible residual powder carried along by the cleaning compressed air; and/or
wherein the at least one fluidizing compressed air outlet comprises a vent line which is connected or connectable on one side to the outlet opening of the fluidizing compressed air outlet and empties on the other side into a suction funnel of a suction unit preferably designed as an air flow amplifier.

6. The multicolor powder center (1) according to one of claims 1 to 5,
wherein at least one level sensor (17) is further provided for detecting at least one powder level inside the first and the at least one second powder container (2.1-2.12).

7. The multicolor powder center (1) according to claim 6,
wherein the at least one level sensor (17) is a non-contact level sensor which is arranged separately from the interior of the powder container (2.1-2.12) external of the powder container (2.1-2.12).

8. The multicolor powder center (1) according to one of claims 1 to 7,
wherein at least one device for measuring the air pressure prevailing within the interior of the first and the at least one second powder container (2.1-2.12) is further provided, wherein at least one aspect of the following specified aspects is preferably also provided:
wherein the volume of fluidizing compressed air supplied to the first and the at least one second powder container (2.1-2.12) per unit of time can preferably be automatically regulated as a function of the air pressure prevailing in the interior of the respective powder container (2.1-2.12); and/or
wherein the volume of cleaning compressed air supplied to the first and the at least one second powder container (2.1-2.12) per unit of time can preferably be automatically regulated as a function of the air pressure prevailing in the interior of the respective powder container (2.1-2.12); and/or
wherein the volume of fluidizing compressed air discharged per unit of time from the first and the at least one second powder container (2.1-2.12) can preferably be automatically regulated as a function of the air pressure prevailing in the interior of the at least one powder container (2.1-2.12); and/or
wherein the volume of cleaning compressed air discharged per unit of time via at least one residual powder outlet can preferably be automatically regulated as a function of the air pressure prevailing in the interior of the first and the at least one second powder container (2.1-2.12).

9. The multicolor powder center (1) according to one of claims 1 to 8, wherein the first and the at least one second powder container (2.1-2.12) comprises the following:
- a level sensor for level monitoring and respective communication; and/or
- a powder fluidizing/preconditioning unit; and/or
- an integrated sieve; and/or
- an integrated vibration unit; and/or
- a sensor system for detecting the correct positioning of the powder container (2.1-2.12); and/or
- a connection to a further or larger fresh powder container external of the multicolor powder center for the automatic replenishing of powder.

10. The multicolor powder center (1) according to one of claims 1 to 9,
wherein the multicolor powder center (1) is allocated a recovery powder recirculation system for refeeding recovery powder back into the first powder container (2.1) and/or the at least one second powder container (2.2-2.12) as required.

11. The multicolor powder center (1) according to claim 10,
wherein the recovery powder recirculation system comprises at least one return line, particularly in the form of a return hose, which is fluidly connected or connectable on one side, in particular as needed, to a powder coating booth and the first powder container (2.1) and/or the at least one second powder container (2.2-2.12) for refeeding recovery powder back into the respective powder container (2.1; 2.2-2.12).

12. The multicolor powder center (1) according to claim 11,
wherein the at least one return line is movable, particularly horizontally movable, relative to the first powder container (2.1) and/or the at least one second powder container (2.2-2.12) on a carriage or slide assembly; and/or
wherein the at least one return line is movable, particularly vertically movable, relative to the first powder container (2.1) and/or the at least one second powder container (2.2-2.12) in order to form a fluidic connection with the respective powder container (2.1; 2.2-2.12).

13. The multicolor powder center (1) according to one of claims 1 to 12,
wherein the multicolor powder center (1) is allocated a powder container venting system for venting the first powder container (2.1) and/or the at least one second powder container (2.2-2.12) as needed.

14. The multicolor powder center (1) according to claim 13,
wherein the powder container venting system comprises at least one vent line, particularly in the form of a venting hose, which is fluidly connected as needed or permanently to the first powder container (2.1) and/or the at least one second powder container (2.2-2.12) as needed for venting the respective powder container (2.1; 2.2-2.12).

15. The multicolor powder center (1) according to claim 14,
wherein the at least one vent line is movable, particularly horizontally movable, relative to the first powder container (2.1) and/or the at least one second powder container (2.2-2.12) on a carriage or slide assembly.

## Revendications

1. Centre d'alimentation en poudre multicolore (1) destiné à alimenter, selon les besoins, au moins un dispositif de pulvérisation de poudre en poudre de revêtement de différents types, le centre d'alimentation en poudre multicolore (1) comprenant ce qui suit :
- un premier réservoir de poudre (2.1) destiné à recevoir de la poudre de revêtement d'un premier type ;
- au moins un second réservoir de poudre (2.2-2.12) destiné à recevoir de la poudre de revêtement d'un second type ; et
- au moins une unité de pompe (3.1-3.6) pourvue d'au moins une pompe à poudre (4) sous la forme d'une pompe à poudre à flux dense, dont le côté refoulement est relié ou peut être relié en termes d'écoulement à l'entrée de poudre d'un dispositif de pulvérisation de poudre,
dans lequel le premier et ledit au moins un second réservoir de poudre (2.1-2.12) présentent chacun un canal d'aspiration, de préférence formé dans un tube d'aspiration, qui présente une ouverture d'aspiration débouchant à l'intérieur du réservoir de poudre (2.1-2.12) et une ouverture de distribution située à l'opposé et débouchant dans un raccord (10), le côté aspiration de ladite au moins une pompe à poudre (4) pouvant être relié en termes d'écoulement au raccord (10) du réservoir de poudre correspondant (2.1-2.12) ;
la chambre à poudre respective du premier et dudit au moins un second réservoir de poudre (2.1-2.12) présente au moins une sortie d'air comprimé de fluidisation ayant une ouverture de sortie pour évacuer l'air comprimé de fluidisation introduit dans la chambre à poudre ;
la sortie d'air comprimé de fluidisation présente un conduit de purge qui, à l'extérieur du réservoir de poudre correspondant (2.1-2.12), est relié ou peut être relié à un tube ascendant pour empêcher une extraction de poudre hors de la chambre à poudre du premier et dudit au moins un second réservoir de poudre (2.1-2.12), en régime de revêtement de poudre du centre d'alimentation en poudre multicolore (1) ;
ladite au moins une unité de pompe (3.1-3.6) comporte une unité d'accueil (8) permettant de relier en termes d'écoulement le côté aspiration de ladite au moins une pompe à poudre (4), selon les besoins, à l'intérieur du premier ou dudit au moins un second réservoir de poudre (2.1-2.12), l'unité d'accueil (8) étant associée à une unité de guidage vertical pour déplacer l'unité d'accueil (8), selon les besoins, dans le sens vertical par rapport au premier et audit au moins un second réservoir de poudre (2.1-2.12) et par rapport à ladite au moins une pompe à poudre (4) de ladite au moins une unité de pompe (3.1-3.6) afin de relier, en termes d'écoulement, le côté aspiration de ladite au moins une pompe à poudre (4) à l'intérieur du premier ou dudit au moins un second réservoir de poudre (2.1-2.12),
ladite au moins une unité de pompe (3.1-3.6) est associée à un ensemble formant navette ou chariot (6) permettant de déplacer avec guidage l'unité de pompe (3.1-3.6), munie de l'unité d'accueil (8), dans un plan horizontal et au-dessus des réservoirs de poudre (2.1-2.12) ainsi que par rapport à ceux-ci.

2. Centre d'alimentation en poudre multicolore (1) selon la revendication 1, dans lequel le raccord (10) est disposé respectivement dans une zone supérieure et en particulier dans une zone de couvercle (11) du premier et dudit au moins un second réservoir de poudre (2.1-2.12), et ceci de telle sorte que le raccord (10) peut être relié en termes d'écoulement au côté aspiration de ladite au moins une pompe à poudre (4) de l'unité de pompe (3.1-3.6).

3. Centre d'alimentation en poudre multicolore (1) selon la revendication 1 ou 2,
dans lequel ledit au moins un canal d'aspiration est formé dans un tube plongeur respectif pénétrant à l'intérieur du premier et dudit au moins un second réservoir de poudre (2.1-2.12) ; ou
ledit au moins un canal d'aspiration est formé dans une paroi latérale respective du premier et dudit au moins un second réservoir de poudre (2.1-2.12).

4. Centre d'alimentation en poudre multicolore (1) selon l'une des revendications 1 à 3,
dans lequel, afin d'augmenter la section d'écoulement effective, l'ouverture d'aspiration du canal d'aspiration respectif, débouchant à l'intérieur du premier et dudit au moins un second réservoir de poudre (2.1-2.12), présente une forme elliptique ; et/ou
le premier et ledit au moins un second un réservoir de poudre (2.1-2.12) comprennent chacun une chambre à poudre sensiblement parallélépipédique ou cylindrique pour la poudre de revêtement et un dispositif de fluidisation pour introduire de l'air comprimé de fluidisation dans la chambre à poudre.

5. Centre d'alimentation en poudre multicolore (1) selon l'une des revendications 1 à 4,
dans lequel, dans une paroi latérale respective ou dans un couvercle respectif du premier et dudit au moins un second réservoir de poudre (2.1-2.12), il est prévu au moins une ouverture d'entrée débouchant à l'intérieur du réservoir de poudre (2.1-2.12) pour amener, selon les besoins, de la poudre de revêtement provenant d'un circuit de retour de poudre ou d'un récipient de poudre fraîche se trouvant à l'extérieur du centre d'alimentation en poudre multicolore (1), ou pour ajouter manuellement de la poudre, en régime de revêtement de poudre du centre d'alimentation en poudre multicolore (1) ou, au choix, pour introduire de l'air comprimé de nettoyage, en régime de nettoyage du centre d'alimentation en poudre multicolore (1) ou du premier et dudit au moins un second réservoir de poudre (2.1-2.12) ; et/ou
il est en outre prévu au moins une sortie respective sortant de l'intérieur du premier et dudit au moins un second réservoir de poudre (2.1-2.12) pour évacuer l'air comprimé de fluidisation introduit dans la chambre à poudre du premier et dudit au moins un second réservoir de poudre (2.1-2.12) ou, au choix, pour évacuer l'air de nettoyage introduit dans la chambre à poudre, en régime de nettoyage, le cas échéant conjointement avec la poudre résiduelle transportée par l'air comprimé de nettoyage ; et/ou
ladite au moins une sortie d'air comprimé de fluidisation présente un conduit de purge qui est relié ou peut être relié d'une part à l'ouverture de sortie de la sortie d'air comprimé de fluidisation et qui débouche d'autre part dans un entonnoir d'aspiration d'une installation d'aspiration réalisée de préférence sous forme d'amplificateur de débit d'air.

6. Centre d'alimentation en poudre multicolore (1) selon l'une des revendications 1 à 5,
dans lequel il est en outre prévu au moins un capteur de niveau (17) pour détecter au moins un niveau de poudre respectif à l'intérieur du premier et dudit au moins un second réservoir de poudre (2.1-2.12).

7. Centre d'alimentation en poudre multicolore (1) selon la revendication 6, dans lequel ledit au moins un capteur de niveau (17) est un capteur de niveau fonctionnant sans contact, qui est disposé à l'extérieur du réservoir de poudre (2.1-2.12) en étant séparé de l'intérieur du réservoir de poudre (2.1-2.12).

8. Centre d'alimentation en poudre multicolore (1) selon l'une des revendications 1 à 7,
dans lequel il est en outre prévu au moins un dispositif de mesure de la pression d'air respective régnant à l'intérieur du premier et dudit au moins un second réservoir de poudre (2.1-2.12), et il est en outre prévu au moins un aspect parmi les aspects mentionnés ci-dessous :
le débit d'air comprimé de fluidisation amené par unité de temps au premier et audit au moins un second réservoir de poudre (2.1-2.12) est réglable, de préférence automatiquement, en fonction de la pression d'air régnant à l'intérieur du réservoir de poudre correspondant (2.1-2.12) ; et/ou
le débit d'air comprimé de nettoyage amené par unité de temps au premier et audit au moins un second réservoir de poudre (2.1-2.12) est réglable, de préférence automatiquement, en fonction de la pression d'air régnant à l'intérieur du réservoir de poudre correspondant (2.1-2.12) ; et/ou
le débit d'air comprimé de fluidisation évacué par unité de temps hors du premier et dudit au moins un second réservoir de poudre (2.1-2.12) est réglable, de préférence automatiquement, en fonction de la pression d'air régnant à l'intérieur du réservoir de poudre correspondant (2.1-2.12) ; et/ou
le débit d'air comprimé de nettoyage évacué par unité de temps via au moins une sortie de poudre résiduelle est réglable, de préférence automatiquement, en fonction de la pression d'air respective régnant à l'intérieur du premier et dudit au moins un second réservoir de poudre (2.1-2.12).

9. Centre d'alimentation en poudre multicolore (1) selon l'une des revendications 1 à 8,
dans lequel le premier et ledit au moins un second réservoir de poudre (2.1-2.12) comprennent chacun les éléments suivants :
- une sonde de niveau, destinée au contrôle du niveau de remplissage, et la communication correspondante ; et/ou
- une fluidisation ou un pré-conditionnement de la poudre ; et/ou
- un tamis intégré ; et/ou
- une unité de vibration intégrée ; et/ou
- un système de capteurs pour détecter le positionnement correct du réservoir de poudre (2.1-2.12) ; et/ou
- un raccordement à un autre récipient de poudre fraîche ou à un récipient plus grand, situé à l'extérieur du centre d'alimentation en poudre multicolore, pour le remplissage automatique de poudre.

10. Centre d'alimentation en poudre multicolore (1) selon l'une des revendications 1 à 9,
dans lequel un système de recyclage de poudre récupérée est associé au centre d'alimentation en poudre multicolore (1) pour recycler, selon les besoins, de la poudre récupérée jusque dans le premier réservoir de poudre (2.1) et/ou jusque dans ledit au moins un second réservoir de poudre (2.2-2.12).

11. Centre d'alimentation en poudre multicolore (1) selon la revendication 10, dans lequel le système de recyclage de poudre récupérée comprend au moins un conduit de recyclage, en particulier sous la forme d'un tuyau de recyclage, qui est ou peut être relié, en particulier selon les besoins, en termes d'écoulement, à une cabine de revêtement de poudre et au premier réservoir de poudre (2.1) et/ou audit au moins un second réservoir de poudre (2.2-2.12), pour recycler de la poudre récupérée dans le réservoir de poudre correspondant (2.1 ; 2.2-2.12).

12. Centre d'alimentation en poudre multicolore (1) selon la revendication 11, dans lequel ledit au moins un conduit de recyclage est mobile, en particulier horizontalement, par rapport au premier réservoir de poudre (2.1) et/ou par rapport audit au moins un second réservoir de poudre (2.2-2.12), sur un ensemble formant navette ou chariot ; et/ou ledit au moins un conduit de recyclage est mobile, en particulier verticalement, par rapport au premier réservoir de poudre (2.1) et/ou par rapport audit au moins un second réservoir de poudre (2.2-2.12), afin d'établir une liaison d'écoulement avec le réservoir de poudre correspondant (2.1 ; 2.2-2.12).

13. Centre d'alimentation en poudre multicolore (1) selon l'une des revendications 1 à 12,
dans lequel un système de purge de réservoir de poudre est associé au centre d'alimentation en poudre multicolore (1) pour purger, selon les besoins, le premier réservoir de poudre (2.1) et/ou ledit au moins un second réservoir de poudre (2.2-2.12).

14. Centre d'alimentation en poudre multicolore (1) selon la revendication 13, dans lequel le système de purge du réservoir de poudre comprend au moins un conduit de purge, en particulier sous la forme d'un tuyau de purge qui, en particulier selon les besoins ou bien en permanence, est relié en termes d'écoulement au premier réservoir de poudre (2.1) et/ou audit au moins un second réservoir de poudre (2.2-2.12) pour purger le réservoir de poudre correspondant (2.1 ; 2.2-2.12).

15. Centre d'alimentation en poudre multicolore (1) selon la revendication 14, dans lequel ledit au moins un conduit de purge est mobile, en particulier horizontalement, par rapport au premier réservoir de poudre (2.1) et/ou par rapport audit au moins un second réservoir de poudre (2.2-2.12), sur un ensemble formant navette ou chariot.
